(19) Europäisches Patentamt
European Patent Office
Office européen des brevets

(11) **EP 3 473 889 A1**

(12) **EUROPÄISCHE PATENTANMELDUNG**

(43) Veröffentlichungstag:
24.04.2019 Patentblatt 2019/17

(51) Int Cl.:
*F16H 3/72* (2006.01)    *F16H 37/08* (2006.01)

(21) Anmeldenummer: 17197394.4

(22) Anmeldetag: **19.10.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Schweiz AG**
**8047 Zürich (CH)**

(72) Erfinder:
• **Schilter, Felix**
**6460 Altdorf (CH)**
• **Wattenhofer, Severin**
**6344 Meierskappel (CH)**

(74) Vertreter: **Maier, Daniel Oliver**
**Siemens AG**
**Postfach 22 16 34**
**80506 München (DE)**

(54) **ANTRIEBSVORRICHTUNG UND VERFAHREN ZUM BETRIEB EINER ANTRIEBSVORRICHTUNG**

(57) Die Erfindung ist eine Antriebsvorrichtung (10) und ein Verfahren zum Betrieb der Antriebsvorrichtung (10), welche jeweils drehbar einen Planetenträger (32), ein Sonnenrad (24) und ein Hohlrad (30) umfasst, wobei der Planetenträger (32) mittels des Sonnenrads (24) und/oder des Hohlrads (30) drehbar ist und eine mit dem Planetenträger (32) verbindbare Abtriebswelle (36) drehbar ist, wobei das Sonnenrad (24) und das Hohlrad (30) gegengleichsinnig antreibbar sind und wobei bei einem Verfahren zum Betrieb der Antriebsvorrichtung (10) aufgrund unterschiedlicher Treibzahlen von Sonnenrad (24) und Hohlrad (30) eine Drehung des Planetenträgers (32) erfolgt.

FIG 2

EP 3 473 889 A1

**Beschreibung**

Die Erfindung betrifft eine Antriebsvorrichtung, nämlich eine rotatorisch wirkende Antriebsvorrichtung, sowie ein Verfahren zum Betrieb einer solchen Antriebsvorrichtung. Rotatorisch wirkende Antriebsvorrichtungen und rotatorisch wirkende Getriebe sind an sich bekannt. Ungünstig ist bei solchen motorisch angetriebenen Antriebsvorrichtungen oftmals, dass wegen eines erforderlichen Hochlaufs eines Motors die auszulösende Bewegung erst mit einem gewissen Zeitverzug erfolgt.

Eine Aufgabe der hier vorgeschlagenen Neuerung besteht zuvorderst darin, eine neue Ausführungsform einer rotatorisch wirkenden Antriebsvorrichtung anzugeben und im Weiteren auch darin, eine rotatorisch wirkende Antriebsvorrichtung anzugeben, die nach einer anfänglichen Aktivierung ohne Zeitverzug wirksam ist.

Die erstgenannte Aufgabe wird erfindungsgemäß mittels einer im Folgenden als Antriebsvorrichtung bezeichneten Vorrichtung mit den Merkmalen des Anspruchs 1 gelöst. Bei einer solchen Antriebsvorrichtung, welche einen drehbaren Planetenträger, ein drehbares Sonnenrad und ein drehbares Hohlrad umfasst, ist vorgesehen, dass der Planetenträger mittels des Sonnenrads und/oder des Hohlrads drehbar ist und dass das Sonnenrad und das Hohlrad antreibbar sind und beim Betrieb der Antriebsvorrichtung angetrieben werden. Mit einer Drehung des Planetenträgers ist eine mit dem Planetenträger verbindbare Abtriebswelle drehbar.

Der Antrieb von Sonnenrad und Hohlrad erfolgt zum Zwecke einer Drehung des Sonnenrads in einer ersten Drehrichtung und einer Drehung des Hohlrads in einer der ersten Drehrichtung entgegengesetzten zweiten Drehrichtung (unterschiedliche Drehrichtungen). Kurz wird dies hier und im Folgenden als gegengleichsinniger Antrieb bezeichnet. Der Ausdruck "gegengleichsinnig" umfasst keine Aussage oder Spezifikation hinsichtlich der Drehzahlen des Sonnenrads oder des Hohlrads.

Bezüglich des Verfahrens wird diese Aufgabe erfindungsgemäß gelöst mittels eines Verfahrens zum Betrieb einer Antriebsvorrichtung, welche einen drehbaren Planetenträger, ein drehbares Sonnenrad und ein drehbares Hohlrad umfasst, wobei bei einem gegengleichsinnigen Antrieb von Sonnenrad und Hohlrad mit unterschiedlichen Drehzahlen eine Drehbewegung des Planetenträgers resultiert und mittels des Planetenträgers eine mit dem Planetenträger verbundene Abtriebswelle gedreht wird. Je nach Art des Antriebs und abhängig vor allem von der Form des Sonnenrads und des Hohlrads und der Art der Einwirkung auf das Sonnenrad und das Hohlrad können auch bei einem gegengleichsinnigen Antrieb des Sonnenrads und des Hohlrads mit gleichen Drehzahlen unterschiedliche Drehzahlen des Sonnenrads und des Hohlrads resultieren. Die allgemeine Definition des Verfahrens lautet damit: Verfahren zum Betrieb einer Antriebsvorrichtung der hier und im Folgenden beschriebenen Art, wobei das Sonnenrad und das Hohlrad gegengleichsinnig und mit unterschiedlichen Drehzahlen angetrieben werden oder gegengleichsinnig und zum Erhalt unterschiedlicher Drehzahlen angetrieben werden.

Die Betrachtung eines aufgrund unterschiedlicher Drehzahlen resultierenden Drehzahlunterschieds von Sonnenrad und Hohlrad ist eine Vereinfachung und lässt die Übersetzungsverhältnisse zu den Planetenrädern des Planetenträgers außer Acht. Der Planetenträger trägt in an sich bekannter Art und Weise Planetenräder, auf welche sowohl das Sonnenrad wie auch das Hohlrad einwirken. Eine resultierende Drehzahl $\omega_A$ des Planetenträgers hängt damit nicht nur von den Drehzahlen von Sonnenrad und Hohlrad, sondern auch von den Übersetzungsverhältnissen vom Sonnenrad auf die Planetenräder des Planetenträgers einerseits sowie vom Hohlrad auf die Planetenräder des Planetenträgers andererseits ab:

$$\omega_A \sim (\omega_S \times i_{SP}) - (\omega_H \times i_{HP}),$$

wobei $\omega_A$ die Drehzahl des Planetenträgers, $\omega_S$ die Drehzahl des Sonnenrads, $\omega_H$ die Drehzahl des Hohlrads, $i_{SP}$ das Übersetzungsverhältnis vom Sonnenrad auf die Planetenräder des Planetenträgers sowie $i_{HP}$ das Übersetzungsverhältnis vom Hohlrad auf die Planetenräder des Planetenträgers bezeichnen. Ausschlaggebend sind also die Produkte aus der jeweiligen Drehzahl und den wirksamen Übersetzungsverhältnissen, die im Folgenden kurz als Treibzahl und mit dem Formelzeichen y bezeichnet werden: $y_s = (\omega_S \times i_{SP})$ ; $y_H = (\omega_H \times i_{HP})$ .

Das Übersetzungsverhältnis vom Sonnen- oder Hohlrad auf die Planetenräder des Planetenträgers wird im Folgenden kurz als das Übersetzungsverhältnis vom Sonnen- bzw. Hohlrad auf den Planetenträger bezeichnet.

Wenn $i_{SP} \approx i_{HP}$ gilt, die Übersetzungsverhältnisse $i_{SP}$ und $i_{HP}$ also im Wesentlichen gleich sind, ist die Formulierung, wonach das Sonnenrad und das Hohlrad gegengleichsinnig und mit unterschiedlichen Drehzahlen ($\omega_S$, $\omega_H$ angetrieben werden oder gegengleichsinnig und zum Erhalt unterschiedlicher Drehzahlen $\omega_S$, $\omega_H$ angetrieben werden, im Wesentlichen korrekt. Exakt ist eine Formulierung, wonach das Sonnenrad und das Hohlrad gegengleichsinnig und mit unterschiedlichen Treibzahlen $y_S$, $y_H$ angetrieben werden oder gegengleichsinnig und zum Erhalt unterschiedlicher Treibzahlen $y_S$, $y_H$ angetrieben werden. Dies ist im Folgenden stets mitzulesen, wenn im Interesse einer Beschreibung einfacher Verhältnisse ($i_{SP} \approx I_{HP}$), auf die der hier vorgeschlagene Ansatz ausdrücklich nicht beschränkt ist, mitunter auch von Drehzahlen oder einem Drehzahlunterschied gesprochen wird.

Der Vorteil der Erfindung besteht darin, dass das Sonnenrad, das Hohlrad und der Planetenträger mit dessen Planetenrädern zusammen als ein von der Antriebsvorrichtung umfasstes Planetengetriebe fungieren. Eine abtriebsseitige Rotation ergibt sich, wenn das Sonnenrad mit einer ersten Treibzahl $y_S$ rotiert und das Hohlrad gegengleichsinnig und mit einer von der ersten Treibzahl $y_S$ verschiedenen zweiten Treibzahl $y_H$ ($y_S \neq y_H$; Treibzahlunterschied) rotiert. Eine abtriebsseitige Drehzahl $\omega_A$ des Planetengetriebes hängt - wie oben beschrieben - im Wesentlichen von dem jeweiligen Treibzahlunterschied $y_s - y_H$ ab. Mittels des von der Antriebsvorrichtung umfassten Planetengetriebes ist eine sehr hohe Untersetzung einer antriebsseitigen Drehzahl, welche die Drehzahlen $\omega_S$, $\omega_H$ von Sonnenrad und Hohlrad (und damit, wegen der festen Übersetzungsverhältnisse, natürlich auch die Treibzahlen $y_S$, $y_H$ von Sonnenrad und Hohlrad) bestimmt, auf die abtriebsseitige Drehzahl $\omega_A$ möglich. Eine solch hohe Untersetzung erfordert normalerweise eine Vielzahl von Getriebeteilen und oftmals mehrere Getriebestufen. Es ergibt sich also bei der hier vorgestellten Neuerung ein vergleichsweise einfacher und damit wartungsarmer, kostengünstiger, platzsparender und leichtgewichtiger Aufbau.

Die Antriebsvorrichtung kommt in motorisch angetriebener Form bevorzugt zur Verwendung in Form eines Stellantriebs, insbesondere für eine Klappe oder für ein Ventil und beispielsweise zum Einstellen eines gasförmigen oder flüssigen Volumenstroms in Betracht. Ein solcher Stellantrieb ist insoweit zum Beispiel für HLK-Anwendungen (HLK für Heizung, Lüftung, Klimatechnik) für eine Gebäudeautomation vorgesehen. Somit ist die Erfindung auch die Verwendung einer motorisch angetriebenen Antriebsvorrichtung der hier und im Folgenden beschriebenen Art als Stellantrieb, insbesondere als Stellantrieb für eine Klappe oder für ein Ventil, beispielsweise zum Einstellen eines gasförmigen oder flüssigen Volumenstroms.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform der gegenständlichen Antriebsvorrichtung oder eines Verfahrens zu deren Betrieb nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer Ausführungsform der Antriebsvorrichtung, genauer bei einer Ausführungsform des von der Antriebsvorrichtung umfassten Planetengetriebes, ist vorgesehen, dass das Sonnenrad einen Achszapfen umfasst, dass das Hohlrad koaxial mit dem Achszapfen einen Ring umfasst, dass der Planetenträger eine Mehrzahl von Planetenrädern aufweist und dass die Planetenräder einerseits mit einer Außenoberfläche des Achszapfens und andererseits mit einer Innenoberfläche des Rings in Wirkverbindung stehen.

Die Wirkverbindung zwischen der Außenoberfläche des Achszapfens und den Planetenrädern sowie der Innenoberfläche des Rings und den Planetenrädern ist bevorzugt eine übliche form- und/oder reibschlüssige Wirkverbindung. Dies gilt auch für alle im Folgenden beschriebenen Wirkverbindungen. Bei einer formschlüssigen Wirkverbindung stehen die einzelnen Komponenten zum Beispiel in Form eines Zahneingriffs in Wirkverbindung.

Bei einer besonderen Ausführungsform der Antriebsvorrichtung und des von der Antriebsvorrichtung umfassten Planetengetriebes ist vorgesehen, dass das Sonnenrad eine erste Scheibe sowie den Achszapfen umfasst, dass sich der Achszapfen mittig auf der ersten Scheibe erhebt und senkrecht zu einer der ebenen Flächen der ersten Scheibe orientiert ist, dass das Hohlrad eine zweite Scheibe sowie den Ring umfasst und dass sich der Ring koaxial mit dem Achszapfen mittig auf der zweiten Scheibe erhebt und mit einer Längsachse senkrecht zu einer der ebenen Flächen der zweiten Scheibe orientiert ist. Die erste Scheibe und die zweite Scheibe erlauben einen besonders einfachen und unkomplizierten Antrieb des Sonnenrads und des Hohlrads.

Bei einer weiteren Ausführungsform der Antriebsvorrichtung und des von der Antriebsvorrichtung umfassten Planetengetriebes sind der Achszapfen einstückig mit der ersten Scheibe und/oder der Ring einstückig mit der zweiten Scheibe verbunden. Eine solche Ausführungsform erhöht die mechanische Belastbarkeit der Antriebsvorrichtung. Eine solche Ausführungsform erleichtert darüber hinaus die Herstellung der jeweiligen Komponenten der Antriebsvorrichtung und der Achszapfen und die erste Scheibe und/oder der Ring und die zweite Scheibe können zum Beispiel in einem Arbeitsschritt hergestellt werden, zum Beispiel als Kunststoffspritzgussteil oder mittels eines generativen Fertigungsverfahrens ("3D-Druck").

Ein zur Erzeugung einer abtriebsseitigen Drehbewegung erforderlicher Treibzahlunterschied $y_S - y_H$ von Sonnenrad und Hohlrad kann auf unterschiedliche Art und Weise erzeugt werden. Eine Möglichkeit besteht in Form einer mittels genau eines Motors angetriebenen Antriebsvorrichtung (monomotorische Antriebsvorrichtung), wobei der genau eine Motor direkt oder indirekt sowohl auf das Sonnenrad wie auch auf das Hohlrad wirkt.

Eine alternative Möglichkeit mit zusätzlichen Vorteilen besteht in Form einer mittels zweier Motoren angetriebenen Antriebsvorrichtung (bimotorische Antriebsvorrichtung), wobei die beiden Motoren unabhängig voneinander einerseits auf das Sonnenrad und andererseits auf das Hohlrad wirken, indem einer der Motoren direkt oder indirekt auf das Sonnenrad wirkt und der andere Motor direkt oder indirekt auf das Hohlrad wirkt. Im Folgenden werden zunächst die monomotorische Antriebsvorrichtung und einzelne Ausführungsformen davon betrachtet. Die Erläuterung der bimotorischen Antriebsvorrichtung und weiterer Ausführungsformen erfolgt im Anschluss.

Bei der monomotorischen Antriebsvorrichtung ist vorgesehen, dass diese genau einen Motor umfasst und dass mittels des Motors eine gegengleichsinnige Rotation von Sonnenrad und Hohlrad mit unterschiedlichen Treibzahlen ($y_S \neq y_H$) bewirkbar ist. Dafür ist vorgesehen, dass die Antriebsvorrichtung neben dem ausgangsseitigen Planetengetriebe eingangsseitig ein weiteres, erstes Getriebe sowie ein nochmals weiteres, zweites Getriebe umfasst. Das erste Getriebe verbindet den Motor direkt oder indirekt mit dem Sonnenrad, nämlich der ersten Scheibe. Das zweite Getriebe verbindet den Motor direkt oder indirekt mit dem Hohlrad, nämlich der zweiten Scheibe.

Wenn das erste Getriebe und das zweite Getriebe unterschiedliche Übersetzungsverhältnisse $i_{G1}$, $i_{G2}$ aufweisen, resultieren beim Antrieb der ersten und der zweiten Scheibe (also des Sonnenrads und des Hohlrads) mittels des ersten bzw. zweiten Getriebes und mit einer Drehzahl $\omega_M$ des Motors unterschiedliche Drehzahlen $\omega_S$, $\omega_H$ des Sonnenrads und des Hohlrads ($\omega_S = \omega_M \times i_{G1}$; $\omega_H = \omega_M \times i_{G2}$). Indem die Übersetzungsverhältnisse $i_{G1}$, $i_{G2}$ des ersten und zweiten Getriebes sowie die Übersetzungsverhältnisse vom Sonnenrad auf den Planetenträger und vom Hohlrad auf den Planetenträger $i_{SP}$, $i_{HP}$ geeignet gewählt sind, so dass sie sich nicht gegenseitig aufheben ($\omega_A \sim [\omega_M \times i_{G1} \times i_{SP}]$ - $[\omega_M \times i_{G2} \times i_{HP}]$), resultieren unterschiedliche Treibzahlen $y_S$, $y_H$ von Sonnenrad und eine ausgangsseitige Drehzahl $\omega_A \neq 0$ :

$$\omega_A \quad \sim \quad (\omega_M \times i_{G1} \times i_{SP}) \quad - \quad (\omega_M \times i_{G2} \times i_{HP})$$
$$\Leftrightarrow \quad \omega_A \quad \sim \quad (\omega_S \times i_{SP}) \quad - \quad (\omega_H \times i_{HP})$$
$$\Leftrightarrow \quad \omega_A \quad \sim \quad y_S \quad - \quad y_H )$$

Weil bei einem Planetengetriebe die Übersetzungsverhältnisse vom Sonnenrad auf den Planetenträger einerseits sowie vom Hohlrad auf den Planetenträger andererseits konstruktionsbedingt niemals gleich sind ($i_{SP} \neq i_{HP}$), können die Übersetzungsverhältnisse des ersten und des zweiten Getriebes sogar gleich sein und es ergibt sich immer noch eine Drehung des Planetenträgers sowie eine abtriebsseitige Drehzahl $\omega_A \neq 0$.

Beim monomotorischen Antrieb wirkt der Motor zum Beispiel mittels eines auf einer Motorwelle platzierten und damit direkt mittels des Motors angetriebenen Ritzels durch Zahneingriff unmittelbar auf die erste Scheibe/auf das Sonnenrad sowie mittels eines auf der Motorwelle platzierten, direkt angetriebenen Ritzels und zumindest eines mittels des Ritzels angetriebenen Zahnrads mittelbar auf die zweite Scheibe/auf das Hohlrad. Das Ritzel und die erste Scheibe bilden das erste Getriebe. Das zweite Getriebe umfasst die zweite Scheibe und jedes zwischen der zweiten Scheibe und dem Motor wirkende Zahnrad. Entsprechend ist bei einer besonderen Ausführungsform der Antriebsvorrichtung vorgesehen, dass mittels des Motors direkt ein auf das Sonnenrad wirkendes Ritzel sowie indirekt, also über zumindest ein zwischengeschaltetes Zahnrad oder dergleichen, ein auf das Hohlrad wirkendes Treibrad antreibbar ist. Bei einer speziellen Ausführungsform der Antriebsvorrichtung ist mittels des Motors eine dritte Scheibe direkt antreibbar, wobei mit der dritten Scheibe eine drehbare vierte Scheibe in Wirkverbindung steht und mittels der vierten Scheibe das Treibrad antreibbar ist, welches wiederum mit der zweiten Scheibe in Wirkverbindung steht. Die dritte Scheibe, die vierte Scheibe, das Treibrad und die zweite Scheibe bilden zusammen das zweite Getriebe. Das zweite Getriebe weist aufgrund der wirksamen Durchmesser der davon umfassten Komponenten ein anderes Übersetzungsverhältnis auf als das erste Getriebe, welches das Ritzel und die erste Scheibe umfasst.

Bei einer weiteren Ausführungsform der Antriebsvorrichtung wirken das Ritzel form- und/oder reibschlüssig auf die erste Scheibe und das Treibrad form- und/oder reibschlüssig auf die zweite Scheibe. Ein Antrieb der beiden Scheiben mittels eines unmittelbar mittels des Motors angetriebenen Ritzels sowie eines mittelbar mittels des Motors angetriebenen Treibrads ist eine einfache, belastbare und leicht zu wartende Antriebsart.

Bei einer nochmals weiteren Ausführungsform der Antriebsvorrichtung wirken das Ritzel in einer ersten Ebene auf die erste Scheibe und das Treibrad in einer zur Ebene der ersten Scheibe parallelen Ebene der zweiten Scheibe auf die zweite Scheibe, insbesondere indem das Ritzel form- und/oder reibschlüssig auf den Umfang der ersten Scheibe und das Treibrad form- und/oder reibschlüssig auf den Umfang der zweiten Scheibe wirken (umfangseitiger Antrieb, zum Beispiel durch Stirnradverzahnung).

Bei einer nochmals weiteren Ausführungsform der Antriebsvorrichtung haben die erste Scheibe und die zweite Scheibe und/oder das Ritzel und das Treibrad unterschiedliche Durchmesser. Dies ist eine konstruktiv einfache Möglichkeit zur Gewährleistung unterschiedlicher Drehzahlen von Sonnenrad und Hohlrad beim monomotorischen Antrieb, die bei entsprechenden Übersetzungsverhältnissen vom Sonnenrad zum Planetenträger sowie vom Hohlrad zum Planetenträger auch zu unterschiedlichen Treibzahlen von Sonnenrad und Hohlrad führen.

Die monomotorische Ausführungsform der Antriebsvorrichtung dreht ausgangs-/abtriebsseitig dauerhaft, sobald der genau eine Motor in Betrieb ist. Die bimotorische Ausführungsform der Antriebsvorrichtung kann ausgangs-/abtriebsseitig auch stillstehen, obwohl beide eingangsseitig als Antrieb wirkende Motoren in Betrieb sind.

Bei einer entsprechenden Ausführungsform der Antriebsvorrichtung weist diese einen ersten Motor und einen zweiten Motor auf, wobei mittels des ersten Motors eine Rotation des Sonnenrads und mittels des zweiten Motors - unabhängig vom ersten Motor und unabhängig vom Sonnenrad - eine mit dem Sonnenrad gegengleichsinnige Rotation des Hohlrads bewirkbar ist. Abhängig von einer jeweiligen Drehzahl $\omega_{M1}$, $\omega_{M2}$ der beiden Motoren resultieren eine proportionale Drehzahl $\omega_S$ des Sonnenrads und eine proportionale Drehzahl $\omega_H$ des Hohlrads. Durch Einstellung einer jeweiligen Drehzahl $\omega_{M1}$, $\omega_{M2}$ der beiden Motoren können also eine Drehzahl $\omega_S$, $\omega_H$ und eine Treibzahl $y_S$, $y_H$ ($y_S = \omega_S \times i_{SP}$; $y_H = \omega_H \times i_{HP}$) des Sonnenrads und des Hohlrads vorgegeben werden sowie gegebenenfalls ein Treibzahlunterschied eingestellt werden. Der für eine abtriebsseitige Rotation notwendige Treibzahlunterschied ist bei der bimotorischen Antriebsvorrichtung nicht notwendig permanent gegeben und ein besonderer Vorteil der bimotorischen Antriebsvorrichtung besteht gerade darin, dass Sonnenrad und Hohlrad auch mit identischen Treibzahlen ($y_S = y_H$) - oder mit einem dem Quotienten der Übersetzungsverhältnisse zum Planetenträger entsprechenden Drehzahlverhältnis: $\omega_S/\omega_H$ = $i_{HP}/i_{SP}$ - rotieren können, sodass die abtriebsseitige Rotation verschwindet ($\omega_A = 0$). Dann kann ausgehend von einer anfänglich identischen Treibzahl von Sonnenrad und Hohlrad die Treibzahl entweder des Sonnenrads oder des Hohlrads erhöht oder verringert werden, sodass jedenfalls eine unterschiedliche Treibzahl von Sonnenrad und Hohlrad resultiert. Eine ausgangsseitige Drehung ($|\omega_A|>0$) ergibt sich dabei unmittelbar in dem Moment, ab dem ein Treibzahlunterschied ($y_S \neq y_H$) besteht. Die Antriebsvorrichtung ist demnach als rotatorischer Antrieb unmittelbar wirksam, ohne dass in dem Moment, in dem die Antriebsvorrichtung als Aktor wirksam sein soll, ein Hochlauf eines Motors oder dergleichen abgewartet werden muss.

Bei einer Ausführungsform der bimotorischen Antriebsvorrichtung wirken der erste Motor form- und/oder reibschlüssig auf die erste Scheibe, also das Sonnenrad, und der zweite Motor form- und/oder reibschlüssig auf die zweite Scheibe, also das Hohlrad. Ein Antrieb der beiden Scheiben mittels jeweils eines unmittelbar mittels jeweils eines der beiden Motoren angetriebenen Ritzels ist eine einfache, belastbare und leicht zu wartende Antriebsart und erlaubt einen symmetrischen Aufbau der Antriebsvorrichtung.

Bei einer weiteren Ausführungsform der bimotorischen Antriebsvorrichtung wirkt der erste Motor mittels eines in einer Ebene der ersten Scheibe drehbaren Ritzels auf die erste Scheibe und damit das Sonnenrad, während der zweite Motor mittels eines in einer zur Ebene der ersten Scheibe parallelen Ebene der zweiten Scheibe drehbaren Ritzels auf die zweite Scheibe und damit das Hohlrad wirkt. Optional ist dabei vorgesehen, dass das mittels des ersten Motors antreibbare und im Betrieb angetriebene Ritzel form- und/oder reibschlüssig auf den Umfang der ersten Scheibe und das mittels des zweiten Motors antreibbare und im Betrieb angetriebene Ritzel form- und/oder reibschlüssig auf den Umfang der zweiten Scheibe wirken, sodass sich zum Beispiel mittels einer Stirnradverzahnung ein umfangseitiger Antrieb der ersten und der zweiten Scheibe ergibt.

Bei einer speziellen Ausführungsform der bimotorischen Antriebsvorrichtung sind identische Übersetzungsverhältnisse vom ersten Motor auf die erste Scheibe sowie vom zweiten Motor auf die zweite Scheibe vorgesehen, zum Beispiel in Form eines identischen Übersetzungsverhältnisses des mittels des ersten Motors angetriebenen Ritzels und der ersten Scheibe einerseits sowie des mittels des zweiten Motors angetriebenen Ritzels und der zweiten Scheibe andererseits. Insoweit kann optional vorgesehen sein, dass die beiden Ritzel und die beiden Scheiben jeweils einen identischen Umfang haben, insbesondere eine übereinstimmende Anzahl von Zähnen entlang ihres jeweiligen Umfangs haben.

Bei einem Verfahren zum Betrieb einer Antriebsvorrichtung der hier und im folgenden beschriebenen Art, nämlich sowohl beim Betrieb einer monomotorischen Antriebsvorrichtung wie auch beim Betrieb einer bimotorischen Antriebsvorrichtung, werden das Sonnenrad und das Hohlrad gegengleichsinnig und entweder dauerhaft (beim monomotorischen Antrieb) oder zumindest zeitweise (beim bimotorischen Antrieb) mit unterschiedlichen Treibzahlen oder zum Erhalt unterschiedlicher Treibzahlen angetrieben. Bei einem solchen gegengleichsinnigen Antrieb und bei unterschiedlichen Treibzahlen $y_S$, $y_H$ ($y_S = \omega_S \times i_{SP}$; $y_H = \omega_H \times i_{HP}$) von Sonnenrad und Hohlrad ($y_S \neq y_H$; Treibzahlunterschied) resultiert eine Drehbewegung des Planetenträgers der Antriebsvorrichtung und mittels des Planetenträgers sowie mit einer Drehzahl $\omega_A$ des Planetenträgers wird zum Beispiel eine mit dem Planetenträger verbundene Abtriebswelle gedreht. Bei einem solchen gegengleichsinnigen Antrieb und bei einem Treibzahlunterschied fungiert die Antriebsvorrichtung als rotatorischer Aktor.

Bei einem Verfahren zum Betrieb einer monomotorischen Ausführungsform der Antriebsvorrichtung wird durch Einstellung einer Drehzahl $\omega_M$ des genau einen Motors eine Drehzahl des Planetenträgers und damit die ausgangs-/abtriebsseitige Drehzahl $\omega_A$ der Antriebsvorrichtung beeinflusst. Die Drehzahl $\omega_A$ des Planetenträgers ist ansonsten durch ein fixes Übersetzungsverhältnis des von der Antriebsvorrichtung umfassten Planetengetriebes, nämlich durch das Übersetzungsverhältnis einerseits zwischen dem Sonnenrad und Planetenrädern des Planetenträgers sowie andererseits zwischen dem Hohlrad und den Planetenrädern, sowie einen aufgrund des monomotorischen Antriebs ebenfalls fixen Drehzahlunterschied von Sonnenrad und Hohlrad bestimmt. Aufgrund der fixen Einflüsse auf die ausgangsseitige

Drehzahl $\omega_A$ resultiert zum Beispiel ein Faktor von 100:1, so dass die eingangsseitige Drehzahl $\omega_M$ des genau einen Motors auf der Abtriebsseite der Antriebsvorrichtung auf ein Hundertstel reduziert ist. Eine Verdopplung der eingangsseitigen Drehzahl $\omega_M$ führt zwar auch zu einer Verdopplung der abtriebsseitigen Drehzahl, diese ist aber nach wie vor auf ein Hundertstel der eingangsseitigen Drehzahl reduziert.

Bei einem Verfahren zum Betrieb einer biomotorischen Ausführungsform der Antriebsvorrichtung werden durch Einstellung einer Drehzahl $\omega_{M1}$ des ersten Motors sowie Einstellung einer Drehzahl $\omega_{M2}$ des zweiten Motors eine Drehzahl $\omega_S$ des Sonnenrads und eine Drehzahl $\omega_H$ des Hohlrads sowie ein Unterschied zwischen den Treibzahlen $y_S$, $y_H$ des Sonnenrads und des Hohlrads eingestellt und durch die Einstellung des Treibzahlunterschieds ($y_S \neq y_H$) die ausgangs-/abtriebsseitige Drehzahl $\omega_A$ der Antriebsvorrichtung beeinflusst. Die Drehzahl des Planetenträgers ist ansonsten durch das in die Treibzahlen $y_S$, $y_H$ eingehende fixe Übersetzungsverhältnis des von der Antriebsvorrichtung umfassten Planetengetriebes bestimmt, nämlich durch das Übersetzungsverhältnis einerseits zwischen dem Sonnenrad und Planetenrädern des Planetenträgers sowie andererseits zwischen dem Hohlrad und den Planetenrädern. Aufgrund des fixen Übersetzungsverhältnisses des Planetengetriebes resultiert beispielsweise ebenfalls ein die abtriebsseitige Drehzahl $\omega_A$ bestimmender Faktor von 100:1. Daneben ist die abtriebsseitige Drehzahl $\omega_A$ aber einerseits durch den einstellbaren Treibzahlunterschied ($y_S$ - $y_H$) von Sonnenrad und Hohlrad und andererseits eine optional ebenfalls einstellbare mittlere Drehzahl von Sonnenrad und Hohlrad bestimmt. Es besteht also zumindest eine Einflussmöglichkeit auf die abtriebsseitige Drehzahl $\omega_A$ und optional bestehen zwei Einflussmöglichkeiten auf die abtriebsseitige Drehzahl: Zumindest kann durch Erhöhung oder Verringerung des Treibzahlunterschieds die abtriebsseitige Drehzahl $\omega_A$ erhöht bzw. verringert werden; optional kann durch Erhöhung oder Verringerung der mittleren Treibzahl von Sonnenrad und Hohlrad die abtriebsseitige Drehzahl $\omega_A$ ebenfalls erhöht bzw. verringert werden. Als mittlere Treibzahl von Sonnenrad und Hohlrad wird dabei die hälftige Summe der Treibzahlen von Sonnenrad und Hohlrad verstanden ($y_S/2 + y_H/2$).

Bei einer speziellen Ausführungsform der bimotorisch angetriebenen Antriebsvorrichtung und eines Verfahrens zu deren Betrieb wird eine Drehrichtung des Planetenträgers, also eine ausgangsseitige Drehrichtung, dadurch eingestellt, dass aufgrund eines entsprechenden Antriebs mittels des jeweiligen Motors entweder das Sonnenrad schneller als das Hohlrad ($\omega_S > \omega_H$) oder das Hohlrad schneller als das Sonnenrad ($\omega_H > \omega_S$) dreht. Dies gilt für einfache Verhältnisse ($i_{SP} \approx i_{HP}$). Eine exakte Formulierung lautet, dass die ausgangsseitige Drehrichtung dadurch eingestellt wird, dass aufgrund eines entsprechenden Antriebs mittels des jeweiligen Motors entweder die Treibzahl $y_S$ des Sonnenrads größer als die Treibzahl $y_H$ des Hohlrads wird ($y_S > y_H$; erste Drehrichtung) oder die Treibzahl $y_H$ des Hohlrads größer als die Treibzahl $y_S$ des Sonnenrads wird ($y_H > y_S$; zweite Drehrichtung).

Während bei der monomotorisch angetriebenen Ausführungsform der Antriebsvorrichtung aufgrund des fixen Drehzahl-/Treibzahlunterschieds die ausgangsseitige Drehrichtung grundsätzlich ebenfalls fix ist und nur durch eine Drehrichtungsumkehr des genau einen Motors, also einen zumindest kurzzeitigen Stillstand des genau einen Motors, geändert werden kann, kann bei der bimotorisch angetriebenen Ausführungsform der Antriebsvorrichtung die ausgangsseitige Drehrichtung grundsätzlich jederzeit durch eine Umkehrung des Treibzahlunterschieds geändert werden, ohne dass dafür die als Antrieb wirkenden Motoren angehalten werden müssen und anschließend erneut hochlaufen müssen. Tatsächlich können die beiden Motoren der bimotorisch angetriebenen Ausführungsform der Antriebsvorrichtung während eines Drehrichtungswechsels in ihrer bisherigen Drehrichtung weiterlaufen und für die Drehrichtungsumkehr ist lediglich eine Beschleunigung und/oder Verzögerung eines der beiden Motoren oder beider Motoren notwendig.

Die bimotorisch angetriebene Antriebsvorrichtung wird bevorzugt aktiviert, indem das Sonnenrad und das Hohlrad auf vorgegebene oder vorgebbare Solldrehzahlen $\omega_{refS}$, $\omega_{refH}$ beschleunigt werden, bei denen der Treibzahlunterschied verschwindet ($y_S$ - $y_H$ = 0). Zu den Solldrehzahlen $\omega_{refS}$, $\omega_{refH}$, bei denen dies gegeben ist, gehört über die Übersetzungsverhältnisse $i_{SP}$, $i_{HP}$ zum Planetenträger eine für Hohl- und Sonnenrad gleiche Treibzahl $y_{ref}$: $Y_{ref} = W_{refS} \times i_{SP} = \omega_{refH} \times i_{HP}$.

Aufgrund der Beschleunigung von Hohl- und Sonnenrad auf die oben genannte und im Folgenden als Solltreibzahl bezeichnete Treibzahl $y_{ref}$ steht die Antriebsvorrichtung abtriebsseitig während der Aktivierung still ($\omega_A$ = 0). Am Ende der Aktivierung und nach Erreichen der Solltreibzahl $y_{ref}$ ist die Antriebsvorrichtung betriebsbereit und durch Einstellung eines Treibzahlunterschieds kann die Funktion der Antriebsvorrichtung als rotatorischer Aktor abgerufen werden sowie durch Einstellung eines Treibzahlunterschieds von Sonnenrad und Hohlrad eine abtriebsseitige Drehzahl $\omega_A$ und eine abtriebsseitige Drehrichtung eingestellt werden.

Bei einer nochmals weiteren Ausführungsform des Verfahrens zum Betrieb der bimotorisch angetriebenen Antriebsvorrichtung wird durch Einstellung der Solltreibzahl $y_{ref}$ ein mittels der Antriebsvorrichtung abtriebsseitig ausübbares Drehmoment $M_A$ eingestellt. Je höher die Solltreibzahl $y_{ref}$ ist, umso höher ist eine anfängliche Treibzahl von Sonnenrad und Hohlrad ($y_{ref} = y_S = y_H$), von der ausgehend sich nachfolgend ein Treibzahlunterschied ergibt. Wenn der Treibzahlunterschied zum Beispiel dadurch eingestellt wird, dass entweder die Drehzahl $\omega_S$ des Sonnenrads oder die Drehzahl $\omega_H$ des Hohlrads über die Solldrehzahl $\omega_{ref}$ angehoben wird und entsprechend die Drehzahl $\omega_H$ des Hohlrads bzw. die Drehzahl $\omega_S$ des Sonnenrads unter die Solldrehzahl $\omega_{ref}$ abgesenkt wird, ist das mittels der Antriebsvorrichtung ausübbare Drehmoment $M_A$ proportional zur Solldrehzahl $\omega_{ref}$.

Bei einer bimotorisch angetriebenen Antriebsvorrichtung erfolgt der Antrieb der beiden von der Antriebsvorrichtung umfassten Motoren bevorzugt unter Kontrolle einer Steuerungseinrichtung. Der Steuerungseinrichtung wird zum Beispiel die Solltreibzahl $y_{ref}$ vorgegeben, woraufhin unter Kontrolle der Steuerungseinrichtung bei einer Aktivierung der Antriebsvorrichtung eine Beschleunigung der beiden Scheiben, also des Sonnenrads und des Hohlrads, mittels der beiden Motoren auf entsprechende Drehzahlen $\omega_S$, $\omega_H$ ($\omega_S = y_{ref}/i_{SP}$; $\omega_H = y_{ref}/i_{HP}$) erfolgt. Beim Betrieb der Antriebsvorrichtung wird der Steuerungseinrichtung als Sollwert zum Beispiel ein Maß für eine gewünschte abtriebsseitige Drehzahl $\omega_A$ (Solldrehzahl) vorgegeben, woraufhin die Steuerungseinrichtung einen die gewünschte abtriebsseitige Drehzahl $\omega_A$ gewährleistenden Treibzahlunterschied von Sonnenrad und Hohlrad bewirkt. Optional wird der Steuerungseinrichtung beim Betrieb der Antriebsvorrichtung als weiterer Sollwert ein Maß für ein gewünschtes, abtriebsseitig aufbringbares Drehmoment (Solldrehmoment) $M_A$ vorgegeben, woraufhin die Steuerungseinrichtung einen die gewünschte abtriebsseitige Drehzahl $\omega_A$ gewährleistenden Treibzahlunterschied sowie eine das Solldrehmoment $M_A$ gewährleistende mittlere Treibzahl von Sonnenrad und Hohlrad ($y_S/2 + y_H/2$) einstellt. Zusätzlich oder alternativ wird der Steuerungseinrichtung beim Betrieb der Antriebsvorrichtung als Sollwert ein Maß für die gewünschte Übersetzung vorgegeben, woraufhin die Steuerungseinrichtung eine zu dem gewünschten Übersetzungsverhältnis passende abtriebsseitige Drehzahl $\omega_A$ und einen diese hervorrufenden Treibzahlunterschied einstellt.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen

FIG 1   eine Explosionsdarstellung einer ersten Ausführungsform einer hier vorgeschlagenen Antriebsvorrichtung,

FIG 2   die Antriebsvorrichtung aus FIG 1 in einer isometrischen Ansicht,

FIG 3   die Antriebsvorrichtung aus FIG 1 und FIG 2 in einer Draufsicht und mit jeweils symbolisch eingezeichneten Übertragungsverhältnissen,

FIG 4   eine Abhängigkeits-Darstellung der Getriebeeinzelteile der Antriebsvorrichtung aus FIG 1 bis FIG 3

FIG 5   eine Explosionsdarstellung einer zweiten Ausführungsform einer hier vorgeschlagenen Antriebsvorrichtung,

FIG 6   die Antriebsvorrichtung aus FIG 5 in einer isometrischen Ansicht,

FIG 7   die Antriebsvorrichtung aus FIG 5 und FIG 6 in einer Draufsicht und mit jeweils symbolisch eingezeichneten Übertragungsverhältnissen,

FIG 8   eine Abhängigkeits-Darstellung der Getriebeeinzelteile der Antriebsvorrichtung aus FIG 5 bis FIG 7 und

FIG 9   ein exemplarisches Bewegungsprofil der Antriebsvorrichtung aus FIG 5 bis FIG 7.

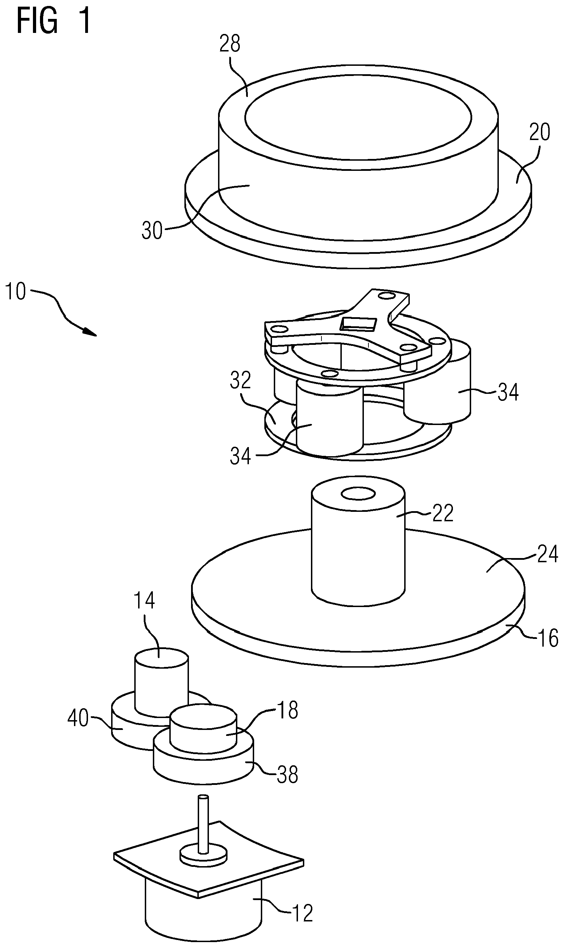

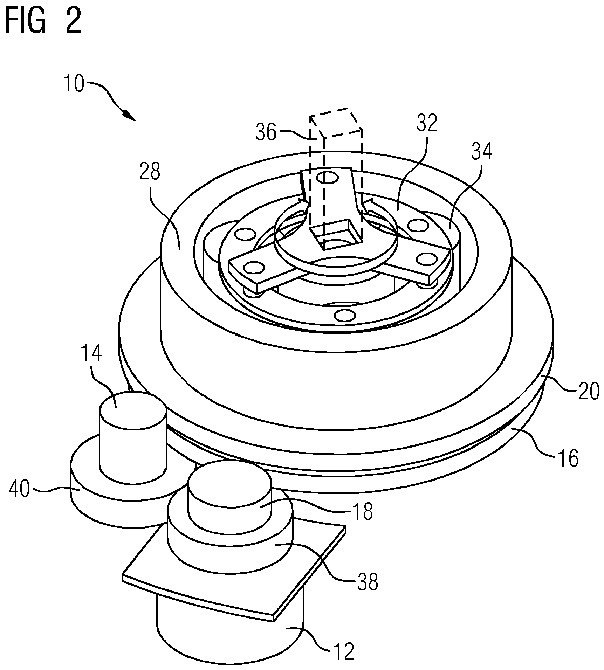

Die Darstellung in FIG 1 zeigt schematisch vereinfacht die wesentlichen Komponenten einer Ausführungsform der hier vorgeschlagenen und zum Beispiel als Stellantrieb fungierenden Antriebsvorrichtung 10 in einer Explosionsdarstellung. Die Darstellung in FIG 2 zeigt die Antriebsvorrichtung 10 in einer isometrischen Ansicht. Sämtliche Komponenten der Antriebsvorrichtung 10 können aus einem Kunststoff, wie z.B. aus Polyamid, und/oder aus Metall, wie z. B. aus Stahl, hergestellt sein.

Die Antriebsvorrichtung 10 umfasst genau einen Motor 12 und ein mittels des Motors 12 angetriebenes Treibrad 14. Der Motor 12 wirkt auf ein erstes Getriebeteil und dort auf eine drehbar gelagerte, kreisrunde erste Scheibe 16, d. h. ein mit der Antriebswelle des Motors 12 verbundenes und mittels des Motors 12 antreibbares und im Betrieb angetriebenes erstes Ritzel 18 steht mit der ersten Scheibe 16 in einer Art und Weise in Wirkverbindung, dass mittels des Motors 12 ein Antrieb der ersten Scheibe 16 möglich ist und beim Betrieb des Motors 12 erfolgt. Dafür sind das erste Ritzel 18 und die erste Scheibe 16 beispielsweise in an sich bekannter Art und Weise als Zahnräder mit einem Zahnprofil, insbesondere einem Zahnprofil entlang ihrer jeweiligen Außenumfangslinie, ausgeführt, sodass das erste Ritzel 18 und die erste Scheibe 16 in Form eines Zahneingriffs in Wirkverbindung stehen. Grundsätzlich kommt auch eine andere Art der Wirkverbindung zwischen dem ersten Ritzel 18 und der ersten Scheibe 16 in Betracht, zum Beispiel eine reibschlüssige Wirkverbindung.

Das Treibrad 14 wirkt auf ein zweites Getriebeteil und dort auf eine ebenfalls drehbar gelagerte und unabhängig von der ersten Scheibe 16 drehbare, kreisrunde zweite Scheibe 20, d.h. das Treibrad 14 steht mit der zweiten Scheibe 20 in einer Art und Weise in Wirkverbindung, dass mittels des Treibrads 14 (und damit mittelbar mittels des Motors 12) ein Antrieb der zweiten Scheibe 20 möglich ist und beim Betrieb des Motors 12 erfolgt. Dafür sind das Treibrad 14 und die zweite Scheibe 20 beispielsweise in an sich bekannter Art und Weise als Zahnräder mit einem Zahnprofil, insbesondere einem Zahnprofil entlang ihrer jeweiligen Außenumfangslinie, ausgeführt, sodass das Treibrad 14 und die zweite Scheibe 20 in Form eines Zahneingriffs miteinander in Wirkverbindung stehen. Grundsätzlich kommt auch eine andere Art der Wirkverbindung zwischen dem Treibrad 14 und der zweiten Scheibe 20 in Betracht, zum Beispiel eine reibschlüssige Wirkverbindung.

Mit der ersten Scheibe 16 ist drehfest und konzentrisch ein zum ersten Getriebeteil gehöriger Achszapfen 22 verbunden. Drehfest meint, dass bei einer Drehung der ersten Scheibe 16 eine entsprechende Drehung des Achszapfens 22 resultiert. Optional ist der Achszapfen 22 einstückig mit der ersten Scheibe 16 verbunden. Der Achszapfen 22 erhebt sich im Zentrum der ersten Scheibe 16 auf der ersten Scheibe 16 und eine Mittellängsachse des Achszapfens 22 verläuft senkrecht zu einer durch eine der ebenen Oberflächen der ersten Scheibe 16 definierten Ebene. Indem sich der Achszapfen 22 im Zentrum der ersten Scheibe 16 erhebt, fällt die Mittellängsachse des Achszapfens 22 mit der Drehachse der ersten Scheibe 16 zusammen; die Drehachse der ersten Scheibe 16 ist auch die Drehachse des Achszapfens 22. Der Achszapfen 22 weist auf seiner Oberfläche bevorzugt ein Zahnprofil (Außenverzahnung) auf. Die erste Scheibe 16 fungiert zusammen mit dem Achszapfen 22 als Sonnenrad 24 der Antriebsvorrichtung 10.

Mit der zweiten Scheibe 20 ist drehfest ein zum zweiten Getriebeteil gehöriger Ring 28 verbunden. Drehfest meint, dass bei einer Drehung der zweiten Scheibe 20 eine entsprechende Drehung des Rings 28 resultiert. Optional ist der Ring 28 einstückig mit der zweiten Scheibe 20 verbunden. Der Ring 28 erhebt sich als Hohlzylinder auf der zweiten Scheibe 20 und eine Mittellängsachse des Rings 28 verläuft senkrecht zu einer durch eine der ebenen Oberflächen der zweiten Scheibe 20 definierten Ebene. Indem sich der Ring 28 mittig auf der zweiten Scheibe 20 erhebt, fällt die Mittellängsachse des Rings 28 mit der Drehachse der zweiten Scheibe 20 zusammen; die Drehachse der zweiten Scheibe 20 ist auch die Drehachse des Rings 28. Der Ring 28 weist auf seiner inneren Mantelfläche bevorzugt ein Zahnprofil (Innenverzahnung) auf. Die zweite Scheibe 20 fungiert zusammen mit dem Ring 28 als Hohlrad 30 der Antriebsvorrichtung 10.

Das Sonnenrad 24 (erstes Getriebeteil) und das Hohlrad 30 (zweites Getriebeteil) sind um eine (gemeinsame) Getriebeachse jeweils drehbeweglich sowie axial und insbesondere radial fixiert angeordnet. Das Hohlrad 30 ist koaxial außenliegend zum ersten Sonnenrad 24 angeordnet. Die Getriebeteile sind in geeigneter Weise in einem nicht gezeigten Gehäuse gelagert, zum Beispiel einem Stellantriebsgehäuse, nämlich zum Beispiel mittels Buchsen, Lager oder Lagerzapfen. Der Motor 12 ist dazu eingerichtet, die beiden Getriebeteile (Sonnenrad 24, Hohlrad 30) zumindest mittelbar anzutreiben.

Die Antriebsvorrichtung 10 umfasst neben dem Sonnenrad 24 und dem Hohlrad 30 als drittes Getriebeteil einen in grundsätzlich an sich bekannter Art und Weise zwischen dem Sonnenrad 24 und dem Hohlrad 30 angeordneten Planetenträger 32 mit Planetenrädern 34. Der Antrieb des Sonnenrads 24 mittels des Motors 12 sowie der Antrieb des Hohlrads 30 ebenfalls mittels des Motors 12 (über das Treibrad 14) führt dazu, dass in der Antriebsvorrichtung 10 der Planetenträger 32 als Abtrieb fungiert und entsprechend ist exemplarisch mittig im Planetenträger 32 ein formschlüssig kontaktierbarer Ausschnitt, hier ein Vierkantausschnitt, gezeigt, in den eine Abtriebswelle 36 eingesetzt werden kann.

Der mittelbare Antrieb des Hohlrads 30 mittels des Motors 12 erfolgt mittels zweier miteinander in Wirkverbindung stehender und dafür zum Beispiel auf ihrem Umfang verzahnter zylindrischer Scheiben (Stirnradverzahnung), die zur Unterscheidung als dritte Scheibe 38 und vierte Scheibe 40 bezeichnet werden. Die dritte Scheibe 38 wird vom Motor 12 angetrieben, befindet sich bevorzugt mit dem Ritzel 18 auf einer gemeinsamen Achse und treibt aufgrund der bestehenden Wirkverbindung ihrerseits die vierte Scheibe 40 an. Das Ritzel 18 und die erste Scheibe 16 bilden zusammen ein erstes Getriebe; die dritte Scheibe 38, die vierte Scheibe 40, das Treibrad 14 und die zweite Scheibe 20 bilden zusammen ein zweites Getriebe.

Das Sonnenrad 24 und das Hohlrad 30 drehen aufgrund des Antriebs mittels des Motors 12 bzw. des Antriebs mittelbar über den Motor 12 und unmittelbar über das Treibrad 14 in entgegengesetzte Richtungen (gegengleichsinnig). Aufgrund des Antriebs mittels genau eines Motors 12 wird diese Ausführungsform der Antriebsvorrichtung 10 auch als monomotorische Antriebsvorrichtung 10 oder als monomotorisch angetriebene Antriebsvorrichtung 10 bezeichnet.

Jeder hier beschriebene Eingriff zweier Komponenten der Antriebsvorrichtung 10 (und der weiter unten beschriebenen bimotorischen Antriebsvorrichtung 10) kann in Form eines Formschlusses, insbesondere in Form eines Zahneingriffs, in Form eines Reibschlusses oder in Form einer magnetischen Drehmomentübertragung bestehen. Dies gilt insbesondere für die folgenden Verbindungen: Ritzel 18 und erste Scheibe 16; Treibrad 14 und zweite Scheibe 20; dritte Scheibe 38 und vierte Scheibe 40; Achszapfen 22 und Planetenräder 34; Planetenräder 34 und Ring 28. Innerhalb der Antriebsvorrichtung 10 können alle Eingriffe in Form eines Formschlusses oder alle Eingriffe in Form eines Reibschlusses bestehen. Genauso können einzelne Eingriffe in Form eines Formschlusses und andere Eingriffe in Form eines Reibschlusses bestehen. Entsprechend gilt dies auch für die weiter unten beschriebene Ausführungsform der Antriebsvorrichtung 10.

Bei einem Antrieb des Sonnenrads 24 und des Hohlrads 30 resultieren eine Drehzahl $\omega_S$ des Sonnenrads 24 und eine Drehzahl des Hohlrads $\omega_H$. Bei einer identischen Treibzahl $y_S$, $y_H$ des Sonnenrads 24 und des Hohlrads 30 steht der Planetenträger 32 still (Drehzahl = 0). Die Treibzahlen $y_S$, $y_H$ sind - wie eingangs beschrieben - über die Übersetzungsverhältnisse $i_{SP}$, $i_{HP}$ zum Planetenträger 32, genauer über die Übersetzungsverhältnisse zu den Planetenrädern 34 des Planetenträgers 32, mit den Drehzahlen ($\omega_S$, $\omega_H$ verknüpft: $y_S = \omega_S \times i_{SP}$, $y_H = \omega_H \times i_{HP}$.

Bei einem Treibzahlunterschied von Sonnenrad 24 und Hohlrad 30 ($y_S \neq y_H$) resultiert eine Rotation des Planetenträgers 32. Bei einer im Vergleich zur Treibzahl $y_S$ des Sonnenrads 24 höheren Treibzahl $y_H$ des Hohlrads 30 resultiert eine Rotation des Planetenträgers 32 in einer ersten Drehrichtung. Bei einer im Vergleich zur Treibzahl $y_H$ des Hohlrads 30 höheren Treibzahl $y_S$ des Sonnenrads 24 resultiert eine Rotation des Planetenträgers 32 in einer der ersten Drehrichtung entgegengesetzten zweiten Drehrichtung. Die möglichen Drehrichtungen sind in der Darstellung in FIG 2 mittels des Blockpfeils oberhalb des Planetenträgers 32 gezeigt.

Die Drehzahl $\omega_A$ des Planetenträgers 32 - und damit die Drehzahl einer damit verbundenen Abtriebswelle 36 - ist proportional zum Treibzahlunterschied von Sonnenrad 24 und Hohlrad 30 ($\omega_A \sim y_S - y_H$) und bei einfachen Verhältnissen ($i_{SP} \approx i_{HP}$) im Wesentlichen proportional zum Drehzahlunterschied von Sonnenrad 24 und Hohlrad 30 ($\omega_A \sim \omega_S - \omega_H$). Bei ähnlichen Treibzahlen $y_S$, $y_H$ von Sonnenrad 24 und Hohlrad 30 ($y_S \approx y_H$) resultiert also eine sehr geringe Drehzahl $\omega_A$ des Planetenträgers 32; Sonnenrad 24, Hohlrad 30 und Planetenträger 32 fungieren in der Antriebsvorrichtung 10 als Differentialgetriebe.

Bei der in FIG 1 und FIG 2 gezeigten Ausführungsform der Antriebsvorrichtung 10 weisen einerseits die erste Scheibe 16 und die zweite Scheibe 18 sowie andererseits das Ritzel 18 und das Treibrad 14 unterschiedliche Durchmesser auf, so dass das Ritzel 18 die erste Scheibe 16 in einer ersten Ebene und das (im Vergleich zum Ritzel 18 kleinere) Treibrad 14 die (im Vergleich zur ersten Scheibe 16 größere) zweite Scheibe 20 in einer zur ersten Ebene parallelen, zweiten Ebene oberhalb der ersten Ebene kontaktieren kann. Die Begriffe "kleiner" und "größer" beziehen sich hierbei auf die jeweiligen Durchmesser. Aufgrund der Durchmesser von Ritzel 18 und erster Scheibe 16 einerseits sowie Treibrad 14 und zweiter Scheibe 20 andererseits resultieren entsprechende Übersetzungsverhältnisse und vor allem unterschiedliche Drehzahlen ($\omega_S$, $\omega_H$ des Sonnenrads 24 und des Hohlrads 30 und damit jeweils verbundene Treibzahlen $y_S$, $y_H$. Aufgrund unterschiedlicher Treibzahlen $y_S$, $y_H$ von Sonnenrad 24 und Hohlrad 30 (Treibzahlunterschied) wird eine Drehbewegung des Planetenträgers 32 ausgelöst. Solange der Quotient der unterschiedlichen Drehzahlen $\omega_S$, $\omega_H$ nicht dem Quotient des Übersetzungsverhältnisses $i_{SP}$, $i_{HP}$ zum Planetenträger 32 entspricht ($\omega_S/\omega_H \neq I_{SP}/I_{HP}$), bewirkt der Antrieb der Antriebsvorrichtung 10 mittels des Motors 12 eine Rotation des Planetenträgers 32 und entsprechend eine Drehung einer mit dem Planetenträger 32 verbundenen/verbindbaren Abtriebswelle 36. Die bei der gezeigten Ausführungsform wirkenden Übersetzungsverhältnisse bewirken eine Rotation des Sonnenrads 24 und des Hohlrads 30 mit zumindest größenordnungsmäßig ähnlichen Drehzahlen ($\omega_S$, $\omega_H$ sowie größenordnungsmäßig ähnlichen Treibzahlen $y_S$, $y_H$. Der Planetenträger 32 und eine damit verbundene Abtriebswelle 36 rotieren also mit einer nur sehr geringen Drehzahl $\omega_A$, jedenfalls mit einer im Vergleich zu einer Drehzahl $\omega_M$ des Motors 12 deutlich geringeren Drehzahl.

Der Vorteil gegenüber einem direkten Antrieb einer solchen Abtriebswelle 36 mittels des Motors 12 besteht darin, dass Sonnenrad 24, Hohlrad 30 und Planetenträger 32 als Getriebe, nämlich als Differentialgetriebe, fungieren und dass aufgrund der Wirkung als Getriebe das Drehmoment des Motors 12 gemäß dem Verhältnis der antriebsseitigen Drehzahl $\omega_M$ zur abtriebsseitigen Drehzahl $\omega_A$ umgesetzt wird. Bei $\omega_A < \omega_M$ resultiert als ein erhöhtes abtriebsseitiges Drehmoment $M_A$ von $M_A = M_M \times \omega_A / \omega_M$, wobei $M_M$ das antriebsseitig wirksame Drehmoment des Motors 12 bezeichnet. Die abtriebsseitige Drehzahl $\omega_A$ ergibt sich aufgrund der Drehzahl und der Übersetzungsverhältnisse der beteiligten Komponenten als

$$\omega_A \quad \sim \quad y_S \qquad\qquad - \qquad y_H$$
$$\Leftrightarrow \quad \omega_A \quad \sim \quad \omega_S \times i_{SP} \qquad - \qquad \omega_H \times i_{HP}$$
$$\Leftrightarrow \quad \omega_A \quad \sim \quad \omega_M \times i_{MS} \times i_{SP} \quad - \quad \omega_M \times i_{MT} \times i_{TH} \times i_{HP},$$

wobei

$\omega_A$ die ausgangs-/abtriebsseitige Drehzahl der Antriebsvorrichtung 10,
$\omega_M$ die Drehzahl des Motors 12,
$i_{MS}$ das Übersetzungsverhältnis des Ritzels 18 und des Sonnenrads 24, nämlich der ersten Scheibe 16,
$i_{MT}$ das Übersetzungsverhältnis der (ritzelseitigen) dritten Scheibe 38 und der (treibradseitigen) vierten Scheibe 40,
$i_{TH}$ das Übersetzungsverhältnis des Treibrads 14 und des Hohlrads 30, nämlich der zweiten Scheibe 20, sowie

$i_{HP}$ und $i_{SP}$ das Übersetzungsverhältnis des Hohlrads 30 (des Rings 28) und der Planetenräder 34 bzw. das Übersetzungsverhältnis des Sonnenrads 24 (des Achszapfens 22) und der Planetenräder 34 bezeichnen.

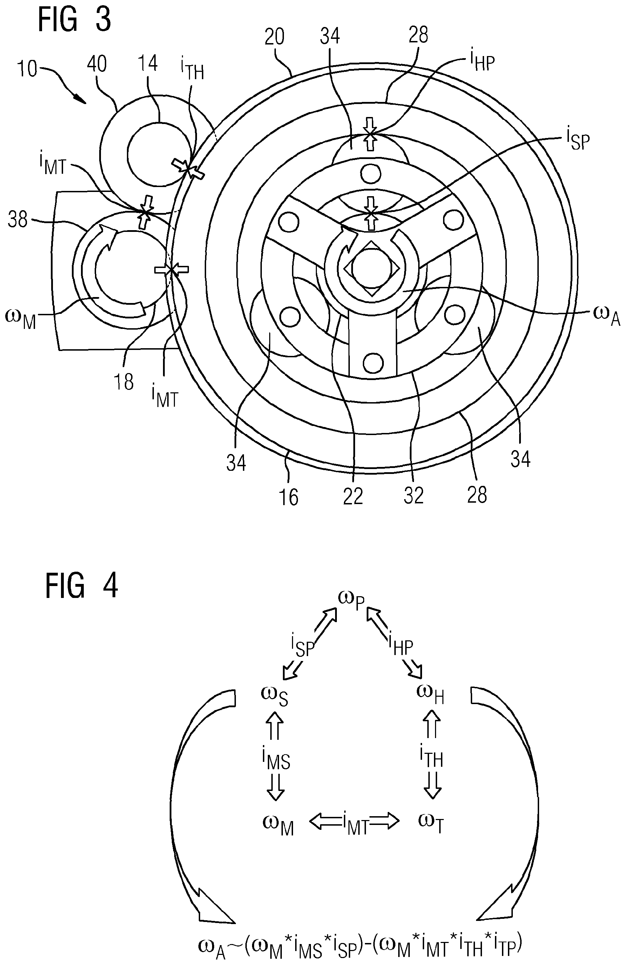

Dies ist in den Darstellungen in FIG 3 und FIG 4 auch graphisch veranschaulicht. In der Darstellung in FIG 4 bezeichnen zusätzlich zu den bereits erwähnten Bezeichnern

$\omega_T$ die Drehzahl des Treibrads 14,

$\omega_S$ die Drehzahl des Sonnenrads 24,

$\omega_H$ die Drehzahl des Hohlrads 30 und

$\omega_P$ die Drehzahl der Planetenräder 34.

Die Antriebsvorrichtung 10 gemäß FIG 1 bis FIG 3 rotiert abtriebsseitig mit einer einerseits von den konstanten Übersetzungsverhältnissen und andererseits von einer grundsätzlich variablen Motordrehzahl $\omega_M$ abhängigen Drehzahl $\omega_A$: $\omega_A \sim \omega_M (i_{MS} \times i_{MP} - i_{MT} \times i_{TH} \times i_{HP})$. Durch eine Anpassung der Motordrehzahl $\omega_M$ können die abtriebsseitige Drehzahl $\omega_A$ und das abtriebsseitige Drehmoment $M_A$ angepasst werden. Durch eine Drehrichtungsumkehr des Motors 12 kann die abtriebsseitige (ausgangsseitige) Drehrichtung umgekehrt werden.

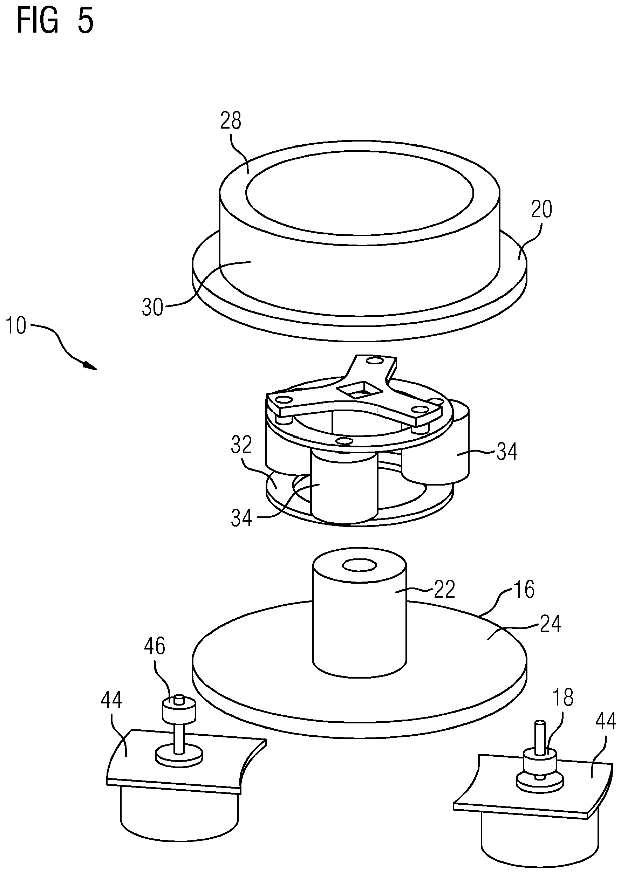

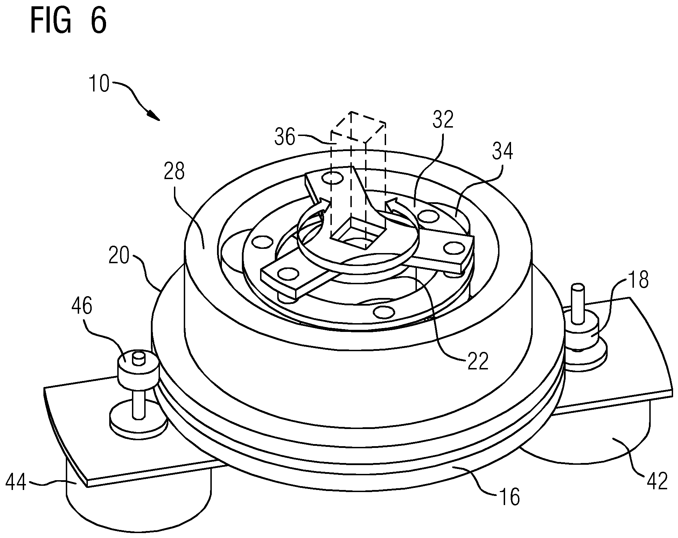

Die Darstellung in FIG 5 zeigt schematisch vereinfacht die wesentlichen Komponenten einer alternativen Ausführungsform der hier vorgeschlagenen Antriebsvorrichtung 10 in einer Explosionsdarstellung. Die Darstellung in FIG 6 zeigt die Antriebsvorrichtung 10 gemäß FIG 5 in einer isometrischen Ansicht.

Im Unterschied zu der Ausführungsform gemäß FIG 1 bis FIG 3 umfasst die Antriebsvorrichtung 10 gemäß FIG 5 und FIG 6 zwei Motoren, nämlich einen ersten Motor 42 und einen zweiten Motor 44. Entsprechend wird diese Ausführungsform der Antriebsvorrichtung 10 auch als bimotorische Antriebsvorrichtung 10 oder bimotorisch angetriebene Antriebsvorrichtung 10 bezeichnet.

Der erste Motor 42 entspricht in seiner Funktion der Funktion des Motors 12 der zuvor beschriebenen, monomotorischen Ausführungsform. Der zweite Motor 44 ersetzt gewissermaßen das Treibrad 14 der zuvor beschriebenen Ausführungsform und treibt mittels eines auf einer Antriebsachse des zweiten Motors 44 befindlichen Ritzels 46 das Hohlrad 30 an, indem das Ritzel 46 auf die zweite Scheibe 20 wirkt. Das Sonnenrad 24 dreht aufgrund des Antriebs mittels des ersten Motors 42 in einer ersten Drehrichtung. Der Hohlrad 30 dreht aufgrund des Antriebs mittels des zweiten Motors 44 in einer der ersten Drehrichtung entgegengesetzten zweiten Drehrichtung (gegengleichsinniger Antrieb).

Bei der Ausführungsform in FIG 5 und FIG 6 entsprechen einerseits das Sonnenrad 24 mit seiner Scheibe (erste Scheibe 16) und dem Achszapfen 22 sowie andererseits das Hohlrad 30 mit seiner Scheibe (zweite Scheibe 20) und dem Ring 28 dem Sonnenrad 24 bzw. dem Hohlrad 30 der zuvor beschriebenen Ausführungsform. Auch der Planetenträger 32 mit seinen Planetenrädern 34 entspricht dem Planetenträger 32 und den Planetenrädern 34 der zuvor beschriebenen Ausführungsform. Insoweit wird zur Vermeidung unnötiger Wiederholungen auf die vorangehende Beschreibung verwiesen.

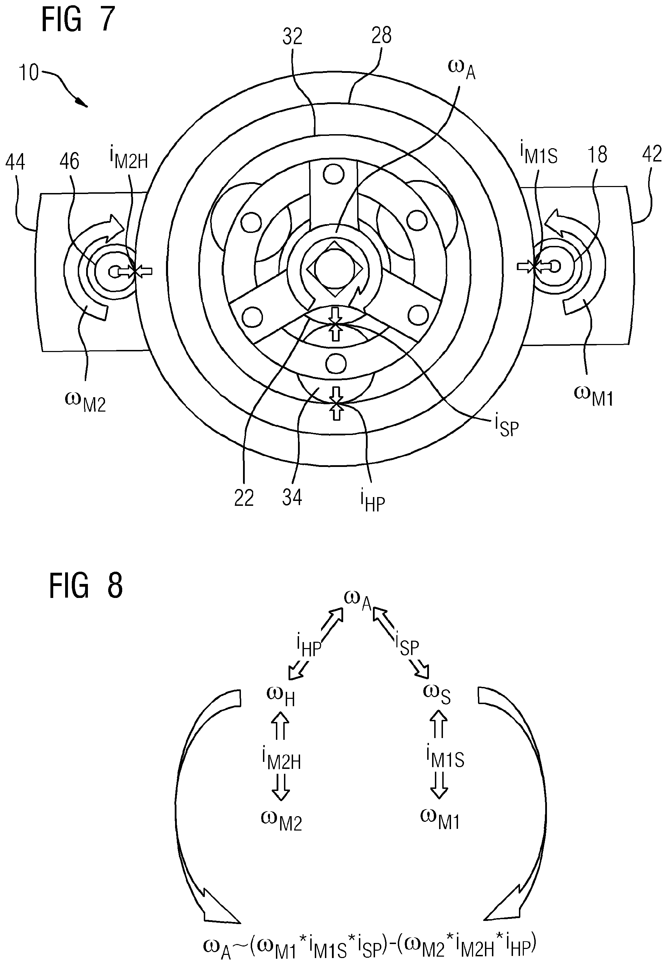

In den Darstellungen in FIG 7 und FIG 8 sind - analog zu den Darstellungen in FIG 3 und FIG 4 - die Übersetzungsverhältnisse und die beim Betrieb wirkenden und resultierenden Drehzahlen gezeigt.

Dabei bezeichnen

$\omega_A$ die ausgangs-/abtriebsseitige Drehzahl der Antriebsvorrichtung 10,

$\omega_{M1}$ die Drehzahl des ersten Motors 42,

$\omega_{M2}$ die Drehzahl des zweiten Motors 44,

$i_{M1S}$ das Übersetzungsverhältnis des Ritzels 18 und des Sonnenrads 24, nämlich des Ritzels 18 und der ersten Scheibe 16, $i_{M2H}$ das Übersetzungsverhältnis des Ritzels 46 und des Hohlrads 30, nämlich des Ritzels 46 und der zweiten Scheibe 20,

$i_{HP}$ und $i_{SP}$ das Übersetzungsverhältnis des Hohlrads 30 (des Rings 28) und der Planetenräder 34 bzw. das Übersetzungsverhältnis des Sonnenrads 24 (des Achszapfens 22) und der Planetenräder 34 sowie

$\omega_S$ die Drehzahl des Sonnenrads 24 und

$\omega_H$ die Drehzahl des Hohlrads 30.

Die abtriebsseitige Drehzahl $\omega_A$ der Antriebsvorrichtung 10 ergibt sich aufgrund der Drehzahlen $\omega_{M1}$, $\omega_{M2}$ der Motoren 42, 44 und der festen Übersetzungsverhältnisse als

$$\omega_A \sim y_S - y_H$$
$$\Leftrightarrow \quad \omega_A \sim \omega_S \times i_{SP} - \omega_H \times i_{HP}$$
$$\Leftrightarrow \quad \omega_A \sim \omega_{M1} \times i_{M1S} \times i_{SP} - \omega_{M2} \times i_{M2H} \times i_{HP}.$$

Beim Betrieb der Antriebsvorrichtung 10 treiben die beiden Motoren 42, 44 die beiden Scheiben 16, 20 gegengleichsinnig an, versetzen diese in Rotation, bewirken damit eine Drehung des mit der ersten Scheibe 16 drehfest verbundenen Achszapfens 22 sowie eine Drehung des mit der zweiten Scheibe 20 drehfest verbundenen Rings 28. Der Achszapfen 22 fungiert als Sonnenrad 24 und eine Drehung des Achszapfens 22 bedeutet entsprechend eine Drehung des Sonnenrads 24 mit einer jeweiligen Drehzahl $\omega_S$. Der Ring 28 fungiert als Hohlrad 30 und eine Drehung des Rings 28 bedeutet entsprechend eine Drehung des Hohlrads 30 mit einer jeweiligen Drehzahl $\omega_H$. Aufgrund des voneinander unabhängigen Antriebs der ersten Scheibe 16 und der zweiten Scheibe 20 (bzw. des Sonnenrads 24 und des Hohlrads 30) kann deren Drehzahl $\omega_S$, $\omega_H$ und damit deren Treibzahl $y_S$, $y_H$ sowie bei einem Treibzahlunterschied ($y_S \neq y_H$) die Drehzahl $\omega_A$ ($\omega_A \sim y_S - y_H$) des Planetenträgers 32 und einer damit verbundenen Abtriebswelle 36 genau eingestellt werden.

Die monomotorische Antriebsvorrichtung 10 gemäß der in FIG 1 bis FIG 3 gezeigten Ausführungsform rotiert immer dann, wenn der Motor 12 in Betrieb ist. Beim Aktivieren des Motors 12 müssen die beweglichen Teile der Antriebsvorrichtung 10 beschleunigt werden und zudem wirkt sich das Hochlaufverhalten des Motors 12 auf den Verlauf der abtriebsseitigen Drehzahl $\omega_A$ aus, sodass sich eine gewünschte Solldrehzahl erst mit einem gewissen Zeitverzug einstellt.

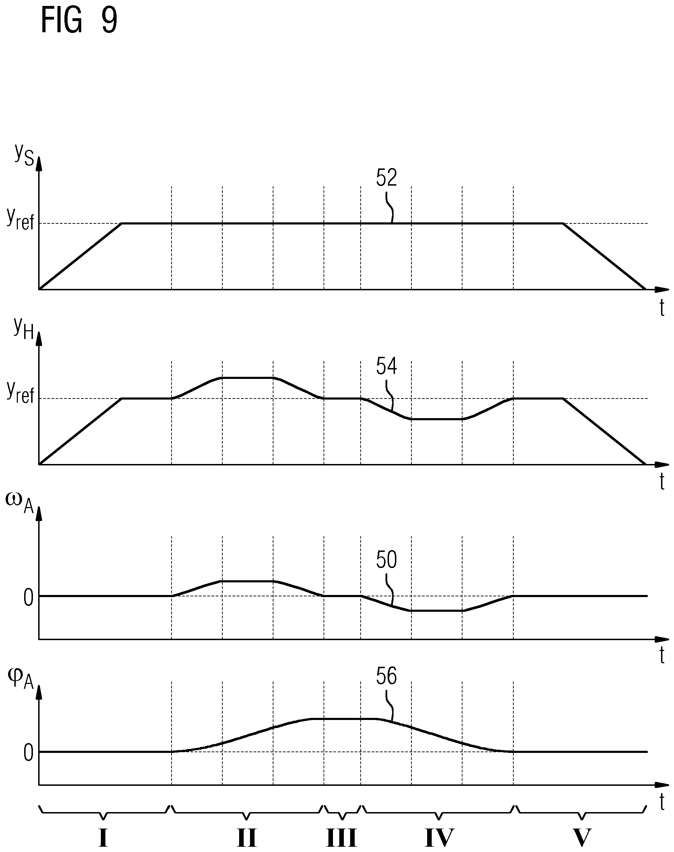

Die bimotorische Antriebsvorrichtung 10 gemäß der in FIG 5 bis FIG 7 gezeigten Ausführungsform kann sich dagegen beim und nach dem Hochlaufen der Motoren 42, 44 und beim und nach dem Beschleunigen der beweglichen Teile der Antriebsvorrichtung 10 auf der Abtriebsseite in Stillstand befinden ($\omega_A = 0$). Ein abtriebsseitiger Stillstand ist dann und so lange gegeben, wenn Sonnenrad 24 und Hohlrad 30 mit entgegengesetzten Drehrichtungen und gleicher Treibzahl rotieren ($y_S = y_H \Leftrightarrow \omega_S = \omega_H \times i_{HP}/i_{SP}$). FIG 9 zeigt dies exemplarisch anhand eines einfachen Bewegungsprofils.

Die Darstellung in FIG 9 zeigt in einem mittleren Bereich über einer Zeitachse einen Graph 50 der ausgangs-/abtriebsseitigen Drehzahl $\omega_A$ sowie darüber - über derselben Zeitachse - jeweils einen Graph 52, 54 der aufgrund eines Antriebs mittels des jeweiligen Motors 42, 44 und der wirksamen Übersetzungsverhältnisse resultierenden Treibzahlen $y_S$, $y_H$ des Sonnenrads 24 und des Hohlrads 30 und darunter - immer noch über derselben Zeitachse - einen Graph 56 der Winkelposition $\varphi_A$ des Planetenträgers 32.

In einem ersten zeitlichen Abschnitt I sind die Treibzahlen $y_S$, $y_H$ des Sonnenrads 24 und des Hohlrads 30 gleich, wobei die Rotationsgeschwindigkeit von einem anfänglichen Stillstand der Motoren 42, 44 sowie des Sonnenrads 24 und des Hohlrads 30 bis zu einer hier symbolisch mit $y_{ref}$ bezeichneten, vorgegebenen oder vorgebbaren und optional veränderlichen Solltreibzahl erhöht wird. Weil die Treibzahlen $y_S$, $y_H$ während des gesamten ersten Abschnitts I gleich sind ($y_S = y_H$), ergibt sich keine Rotation des Planetenträgers 32 und entsprechend steht die Antriebsvorrichtung 10 auf der Abtriebsseite still ($\omega_A = 0$; $\varphi_A = 0$), obwohl beide Motoren 42, 44 aktiv sind und Sonnenrad 24 und Hohlrad 30 sich mit den jeweiligen Drehzahlen $\omega_S$, $\omega_H$ drehen (in entgegengesetzte Richtungen).

In einem an den ersten zeitlichen Abschnitt I anschließenden zweiten zeitlichen Abschnitt II ergibt sich durch eine Änderung der Drehzahl $\omega_H$ des Hohlrads 30 ein Unterschied zwischen den Treibzahlen $y_S$, $y_H$ des Sonnenrads 24 und des Hohlrads 30. Bei der exemplarisch gezeigten Situation ist die Treibzahl $y_H$ des Hohlrads 30 größer als die Treibzahl $y_S$ des Sonnenrads 24 und steigt ausgehend von der Solltreibzahl $y_{ref}$ zunächst linear an, bleibt dann für eine gewisse Zeit oberhalb der Solltreibzahl $y_{ref}$ konstant und sinkt anschließend wieder linear bis zur Solltreibzahl $y_{ref}$ ab. Die Treibzahlunterschiede ($y_S < y_H$) führen zu einer Rotation des Planetenträgers 32 $\omega_A > 0$; $\varphi_A > 0$), wobei die Drehzahl $\omega_A$ des Planetenträgers 32 proportional zum Treibzahlunterschied von Sonnenrad 24 und Hohlrad 30 ist: $\omega_A \sim (y_S - y_H)$. Die Drehzahl $\omega_A$ des Planetenträgers 32 ist also im Bereich des maximalen Treibzahlunterschieds am größten und sinkt zum Ende des zweiten zeitlichen Abschnitts II, wenn sich die Treibzahlen $y_S$, $y_H$ des Sonnenrads 24 und des Hohlrads 30 wieder einander annähern, ab.

Während eines an den zweiten zeitlichen Abschnitt II anschließenden dritten zeitlichen Abschnitts III sind die Treibzahlen $y_S$, $y_H$ des Sonnenrads 24 und des Hohlrads 30 wieder gleich ($y_S = y_H$), so dass der Planetenträger 32 erneut stillsteht ($\omega_A = 0$). Die bisher erreichte Winkelposition $\varphi_A$ des Planetenträgers 32 bleibt dabei erhalten, so dass der Graph 56 im dritten zeitlichen Abschnitts III ein Plateau aufweist.

In einem an den dritten zeitlichen Abschnitt III anschließenden vierten zeitlichen Abschnitt IV ergibt sich erneut ein Unterschied zwischen den Treibzahlen $y_S$, $y_H$ des Sonnenrads 24 und des Hohlrads 30. Bei der exemplarisch gezeigten Situation ist die Treibzahl $y_H$ des Hohlrads 30 kleiner als die Treibzahl $y_S$ des Sonnenrads 24 und fällt ausgehend von der Solltreibzahl $y_{ref}$ zunächst linear, bleibt dann für eine gewisse Zeit unterhalb der Solltreibzahl $y_{ref}$ konstant und steigt anschließend wieder linear bis zur Solltreibzahl $y_{ref}$ an. Die Treibzahlunterschiede führen erneut zu einer Rotation des Planetenträgers 32, diesmal allerdings - im Gegensatz zu der Situation im zweiten zeitlichen Abschnitt II - wegen $y_S > y_H$ in entgegengesetzter Richtung ($\omega_A < 0$). Aufgrund der Rotation des Planetenträgers 32 in einer im Gegensatz zur Drehrichtung im zweiten zeitlichen Abschnitt II entgegengesetzten Richtung reduziert sich die bisher erreichte Winkelposition $\varphi_A$. Aufgrund der Gleichartigkeit (nach Dauer und Betrag) des Treibzahlunterschieds im zweiten zeitlichen Abschnitt II und im vierten zeitlichen Abschnitt IV ist am Ende des vierten zeitlichen Abschnitts IV wieder die ursprüngliche Winkelposition $\varphi_A$ erreicht: $\varphi_A = 0$.

Dasselbe "Zurückdrehen" ($\omega_A < 0$) des Planetenträgers 32 würde sich im Übrigen auch ergeben, wenn - anders als dargestellt - im vierten zeitlichen Abschnitt IV nicht die Treibzahl $y_H$ des Hohlrads 30 unter die Solltreibzahl $y_{ref}$ fallen würde, sondern vielmehr die Treibzahl $y_S$ des Sonnenrads 24 mit demselben Trapezprofil wie im zweiten zeitlichen Abschnitt II oder mit dem gespiegelten, aber ansonsten identischen Trapezprofil wie im vierten zeitlichen Abschnitt IV über die Solltreibzahl $y_{ref}$ angehoben wird.

In diesem Zusammenhang erscheint es wichtig, darauf hinzuweisen, dass für ein Vorwärts- oder Rückwärtsdrehen des Planetenträgers 32 nicht notwendig entweder die Treibzahl $y_S$ des Sonnenrads 24 oder die Treibzahl $y_H$ des Hohlrads 30 bei der Solltreibzahl $y_{ref}$ verharren muss. Ein Treibzahlunterschied ($y_S \neq y_H$) zum Auslösen einer Drehbewegung und einer Vorwärts- oder Rückwärtsdrehung kann selbstverständlich auch dadurch ausgelöst werden, dass aufgrund einer entsprechenden Drehzahl ($\omega_S$, $\omega_H$ eine der Treibzahlen $y_S$, $y_H$ unter die Solltreibzahl $y_{ref}$ sinkt (zum Beispiel $y_S < y_{ref}$), während die andere Treibzahl $y_S$, $y_H$ über die Solltreibzahl $y_{ref}$ steigt (zum Beispiel $y_H > y_{ref}$).

Genauso kann ein Treibzahlunterschied erzeugt werden, wenn aufgrund entsprechender Drehzahlen ($\omega_S$, $\omega_H$ beide Treibzahlen $y_S$, $y_H$ über der Solltreibzahl $y_{ref}$ liegen ($y_S > y_{ref}$; $y_H > y_{ref}$; $y_S \neq y_H$) oder beide Treibzahlen $y_S$, $y_H$ unter der Solltreibzahl $y_{ref}$ liegen ($y_S < y_{ref}$; $y_H < y_{ref}$; $y_S \neq y_H$).

In einem abschließenden, an den vierten zeitlichen Abschnitt IV anschließenden fünften zeitlichen Abschnitt V werden die Motoren 42, 44 schließlich gestoppt und entsprechend kommen am Ende des fünften zeitlichen Abschnitts V dann das Sonnenrad 24 und das Hohlrad 30 zum Stillstand ($\omega_S = y_S = \omega_H = y_H = 0$). Während des gesamten fünften zeitlichen Abschnitts V sind die Treibzahlen $y_S$, $y_H$ von Sonnenrad 24 und Hohlrad 30 gleich ($y_S = y_H$), sodass der Planetenträger 32 stillsteht ($\omega_A = 0$) und sich dessen Winkelposition (Rotationslage) $\varphi_A$ nicht mehr ändert.

Das in FIG 9 gezeigte Bewegungsprofil und der Verlauf der Treibzahlen $y_S$, $y_H$ und der jeweils zugrunde liegenden Drehzahlen $\omega_S$, $\omega_H$ von Sonnenrad 24 und Hohlrad 30 ist selbstverständlich nur exemplarisch. Der exemplarische Treibzahlverlauf macht deutlich, dass mittels einer gesteuerten oder geregelten Änderung der Drehzahlen ($\omega_S$, $\omega_H$ von Sonnenrad 24 und Hohlrad 30 zum Erhalt entsprechender Treibzahlen $y_S$, $y_H$ eine Rotation des Planetenträgers 32 ausgelöst sowie eine Drehrichtung dieser Rotation vorgegeben werden kann. Die Rotation des Planetenträgers 32 ergibt sich unmittelbar in dem Moment, in dem aufgrund entsprechender Drehzahlen ($\omega_S$, $\omega_H$ ein Treibzahlunterschied ($y_S \neq y_H$) auftritt. Anders als zum Beispiel bei einem für eine Drehbewegung direkt motorisch angetriebenen Getriebe entsteht kein Zeitverzug aufgrund einer Anlaufphase des Motors oder dergleichen.

Mittels der Drehbewegung des Planetenträgers 32 und einer damit verbundenen Abtriebswelle 36 kann zum Beispiel eine Lüftungsklappe oder dergleichen geöffnet oder geschlossen werden. Auf diese Weise kann zum Beispiel im Rahmen einer Gebäudeautomatisierung im Falle eines Brandes eine Lüftungsklappe geöffnet oder geschlossen werden.

Das Anfahren der beiden Motoren 42, 44 bis zum Erreichen der für die Solltreibzahl $y_{ref}$ von Sonnenrad 24 und Hohlrad 30 notwendigen Drehzahlen - wie dies im ersten zeitlichen Abschnitt I gezeigt ist - kann als Anfahren oder Aktivieren der Antriebsvorrichtung 10 aufgefasst werden. Das Herunterfahren der beiden Motoren 42, 44 bis zum Stillstand von Sonnenrad 42 und Hohlrad 44 - wie dies im fünften zeitlichen Abschnitt V gezeigt ist - kann als Herunterfahren oder Deaktivieren der Antriebsvorrichtung 10 aufgefasst werden. Zwischen dem Anfahren und dem Herunterfahren der Antriebsvorrichtung 10 können in Bezug auf Drehrichtung und Rotationsgeschwindigkeit beliebige rotatorische Bewegungen des Planetenträgers 32 ausgelöst werden. Für eine Umkehr der Drehrichtung des Planetenträgers 32 ist dabei beispielsweise keine Umkehr der Drehrichtung eines der Motoren 42, 44 sowie eine Umkehr der Drehrichtung entweder des Sonnenrads 24 oder des Hohlrads 30 erforderlich, sondern nur eine Beschleunigung und/oder Verzögerung des Sonnenrads 24 oder des Hohlrads 30, so dass sich das Vorzeichen des Treibzahlunterschieds umkehrt. Die bewegten Massen der Antriebsvorrichtung 10 bleiben dabei in Rotation (vor allem gleichsinnig), so dass extrem schnelle Drehzahländerungen auf der Abtriebsseite sowie extrem schnelle Drehrichtungsänderungen der Abtriebsseite möglich sind.

Durch eine exakte Einstellung eines Treibzahlunterschieds von Sonnenrad 24 und Hohlrad 30 kann die abtriebsseitige Drehzahl/Rotationsgeschwindigkeit ebenfalls exakt eingestellt werden und zwar auch auf sehr kleine Drehzahlen, zum Beispiel auf deutlich weniger als eine Umdrehung pro Minute (< 1 U/min). Eine übliche ausgangsseitige Drehzahl für Klappenantriebe (zum Antrieb von Lüftungsklappen oder dergleichen) beträgt zum Beispiel ungefähr 0,1 U/min und die hier beschriebene Antriebsvorrichtung 10 kommt unter anderem zur Verwendung als Klappenantrieb in Betracht. Durch Einstellen des Treibzahlunterschieds kann die abtriebsseitige Drehrichtung eingestellt werden. Während des Betriebs der Antriebsvorrichtung 10 kann die Solltreibzahl $y_{ref}$ von Sonnenrad 24 und Hohlrad 30 grundsätzlich beliebig verändert werden und durch eine Anpassung der Solltreibzahl $y_{ref}$ ist eine Einstellung des abtriebsseitigen Drehmoments $M_A$ möglich (aufgrund einer höheren Solltreibzahl $y_{ref}$ resultiert ein größeres aufbringbares Drehmoment $M_A$; aufgrund einer geringeren Solltreibzahl $y_{ref}$ resultiert entsprechend ein geringeres aufbringbares Drehmoment $M_A$, wenn ausgehend von der jeweiligen Solltreibzahl $y_{ref}$ ein Treibzahlunterschied eingestellt wird.

In der Darstellung in FIG 6 ist erkennbar, dass die zum Sonnenrad 24 gehörige erste Scheibe 16 und die zum Hohlrad 30 gehörige zweite Scheibe 20 in parallelen Ebenen drehen und bei der gezeigten Ausführungsform in grundsätzlich optionaler Art und Weise denselben Durchmesser haben. Gleiche Durchmesser der beiden Scheiben 16, 20 erlauben eine leichtere Einhaltung identischer Drehzahlen der beiden Scheiben 16, 20 und damit identischer Drehzahlen $\omega_S$, $\omega_H$ von Sonnenrad 24 und Hohlrad 30, zum Beispiel durch eine elektrische Kopplung der beiden Motoren 42, 44, nämlich eine elektrische Kopplung der felderzeugenden Elemente der dann als Synchronmotoren ausgeführten Motoren 42, 44, welche zur Einstellung eines Drehzahlunterschieds temporär wieder aufgehoben wird. Identische Drehzahlen $\omega_S$, $\omega_H$ aufgrund bauartbedingter unterschiedlicher Übersetzungsverhältnisse $i_{SP}$, $i_{HP}$ zu unterschiedlichen Treibzahlen und der resultierende Treibzahlunterschied führt zu einer abtriebsseitigen Drehbewegung mit einer konstanten Drehzahl $\omega_A$ ($\omega_A \sim i_{SP} / i_{HP}$).

Die vom ersten und zweiten Motor 42, 44 angetriebenen Ritzel 18, 46 befinden sich an einer jeweiligen Antriebswelle des Motors 42, 44 in einer einen Antrieb der jeweiligen Scheibe 16, 20 erlaubenden Position, hier einer einen solchen Antrieb erlaubenden axialen Position an der Antriebswelle. Dabei ist darauf hinzuweisen, dass die bei der gezeigten Ausführungsform gegebene Orientierung der Antriebswellen der beiden Motoren 42, 44 parallel zur Drehachse des Planetenträgers 32 nur eine von mehreren Möglichkeiten ist. Genauso kommt ein Antrieb der Scheiben 16, 20 mittels einer Kronen- oder Kegelradverzahnung in Betracht. Dann sind alle bei einer solchen Verzahnung möglichen Orientierungen der Antriebswellen der beiden Motoren 42, 44 relativ zur Drehachse des Planetenträgers 32 möglich, insbesondere eine Orientierung der Antriebswellen senkrecht zur Orientierung/Drehachse des Planetenträgers 32.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden eine Antriebsvorrichtung 10 und ein Verfahren zum Betrieb einer Antriebsvorrichtung 10. Die Antriebsvorrichtung 10 umfasst einen drehbaren Planetenträger 32, ein drehbares Sonnenrad 24 und ein drehbares Hohlrad 30. Der Planetenträger 32 ist mittels des Sonnenrads 24 und/oder des Hohlrads 30 drehbar. Dafür sind das Sonnenrad 24 und das Hohlrad 30 gegengleichsinnig antreibbar. Aufgrund einer Drehung des Planetenträgers 32 ist eine mit dem Planetenträger 32 verbundene oder verbindbare Abtriebswelle 36 drehbar. Bei einem Verfahren zum Betrieb der Antriebsvorrichtung 10 erfolgt aufgrund unterschiedlicher Treibzahlen und jeweils zugrunde liegender Drehzahlen $\omega_S$, $\omega_H$ von Sonnenrad 24 und Hohlrad 30 eine Drehung des Planetenträgers 32. Die hier vorgeschlagene Antriebsvorrichtung 10 kommt in motorisch angetriebener Form bevorzugt zur Verwendung als Stellantrieb oder in einem Stellantrieb, insbesondere für eine Klappe oder für ein Ventil, zum Beispiel zum Einstellen eines gasförmigen oder flüssigen Volumenstroms, in Betracht. Ein solcher Stellantrieb umfasst zumindest einen Motor 12, 44, eine dem oder jedem Motor 12, 44 nachgeschaltete und als Getriebe des Stellantriebs fungierende Antriebsvorrichtung 10 (wie hier oder im allgemeinen Beschreibungsteil beschrieben) sowie einen der Antriebsvorrichtung 10 nachgeschalteten Stellanschluss zum Anschließen an der Klappe oder an dem Ventil.

Bezugszeichenliste

| | |
|----|----|
| 10 | Antriebsvorrichtung |
| 12 | Motor |
| 14 | Treibrad |
| 16 | (erste) Scheibe |
| 18 | Ritzel |
| 20 | (zweite) Scheibe |
| 22 | Achszapfen |
| 24 | Sonnenrad |
| 26 | (frei) |
| 28 | Ring |
| 30 | Hohlrad |
| 32 | Planetenträger |
| 34 | Planetenrad |
| 36 | Abtriebswelle |
| 38 | (dritte) Scheibe |
| 40 | (vierte) Scheibe |
| 42 | (erster) Motor |
| 44 | (zweiter) Motor |
| 46 | Ritzel |
| 48 | (frei) |
| 50 | Graph |
| 52 | Graph |
| 54 | Graph |
| 56 | Graph |

**Patentansprüche**

1.  Antriebsvorrichtung (10) mit einem jeweils drehbaren Planetenträger (32), Sonnenrad (24) und Hohlrad (30),

    - wobei der Planetenträger (32) mittels des Sonnenrads (24) und/oder des Hohlrads (30) drehbar ist und eine mit dem Planetenträger (32) verbindbare Abtriebswelle (36) drehbar ist, und
    - wobei das Sonnenrad (24) und das Hohlrad (30) gegengleichsinnig antreibbar sind.

2.  Antriebsvorrichtung (10) nach Anspruch 1,

    - wobei das Sonnenrad (24) einen Achszapfen (22) umfasst,
    - wobei das Hohlrad (30) koaxial mit dem Achszapfen (22) einen Ring (28) umfasst,
    - wobei der Planetenträger (32) eine Mehrzahl von Planetenrädern (34) aufweist, und
    - wobei die Planetenräder (34) einerseits mit einer Außenoberfläche des Achszapfens (22) und andererseits mit einer Innenoberfläche des Rings (28) in Wirkverbindung stehen.

3.  Antriebsvorrichtung (10) nach Anspruch 2,

    - wobei das Sonnenrad (24) eine erste Scheibe (16) und den Achszapfen (22) umfasst,
    - wobei sich der Achszapfen (22) mittig auf der ersten Scheibe (16) erhebt und senkrecht zu einer der ebenen Flächen der ersten Scheibe (16) orientiert ist,
    - wobei das Hohlrad (30) eine zweite Scheibe (20) und den Ring (28) umfasst, und
    - wobei sich der Ring koaxial mit dem Achszapfen (22) mittig auf der zweiten Scheibe (20) erhebt und mit einer Längsachse senkrecht zu einer der ebenen Flächen der zweiten Scheibe (20) orientiert ist.

4.  Antriebsvorrichtung (10) nach einem der Ansprüche 1 bis 3, mit genau einem Motor (12), mit einem mittels des Motors (12) antreibbaren ersten Getriebe (18, 16) zwischen Motor (12) und Sonnenrad (24), mit einem mittels des Motors (12) antreibbaren zweiten Getriebe (38, 40, 14, 20) zwischen Motor (12) und Hohlrad (30) und mit einem unterschiedlichen Übersetzungsverhältnis von erstem Getriebe (18, 16) und zweitem Getriebe (38, 40, 14, 20).

5.  Antriebsvorrichtung (10) nach Anspruch 4, wobei mittels des Motors (12) direkt ein auf das Sonnenrad (24) wirkendes Ritzel (18) sowie indirekt ein auf das Hohlrad (30) wirkendes Treibrad (14) antreibbar ist.

6.  Antriebsvorrichtung (10) nach Anspruch 5,

    - wobei mittels des Motors (12) eine dritte Scheibe (38) antreibbar ist,
    - wobei mit der dritten Scheibe (38) eine drehbare vierte Scheibe (40) in Wirkverbindung steht und
    - wobei mittels der vierten Scheibe (40) das Treibrad (14) antreibbar ist.

7.  Antriebsvorrichtung nach Anspruch 4 und einem der Ansprüche 5 oder 6, wobei das Ritzel (18) form- und/oder reibschlüssig auf die erste Scheibe (16) und das Treibrad (14) form- und/oder reibschlüssig auf die zweite Scheibe (20) wirkt.

8.  Antriebsvorrichtung (10) nach Anspruch 7, wobei das Ritzel (18) in einer ersten Ebene auf die erste Scheibe (16) wirkt und das Treibrad (14) in einer zur Ebene der ersten Scheibe (16) parallelen Ebene der zweiten Scheibe (20) auf die zweite Scheibe (20) wirkt.

9.  Antriebsvorrichtung nach Anspruch 7 oder 8, wobei die erste Scheibe (16) und die zweite Scheibe (20) und/oder das Ritzel (18) und das Treibrad (14) unterschiedliche Durchmesser haben.

10. Antriebsvorrichtung (10) nach einem der Ansprüche 1 bis 3, mit einem ersten Motor (42) und einem zweiten Motor (44), wobei mittels des ersten Motors (42) eine Rotation des Sonnenrads (24) und mittels des zweiten Motors (44) eine mit dem Sonnenrad (24) gegengleichsinnige Rotation des Hohlrads (30) bewirkbar ist.

11. Antriebsvorrichtung (10) nach Anspruch 3 und Anspruch 10, wobei der erste Motor (42) form- und/oder reibschlüssig auf die erste Scheibe (16) wirkt und der zweite Motor (44) form- und/oder reibschlüssig auf die zweite Scheibe (20) wirkt.

**12.** Antriebsvorrichtung (10) nach Anspruch 11, wobei der erste Motor (42) mittels eines in einer Ebene des ersten Scheibe (16) drehbaren Ritzels (18) auf die erste Scheibe (16) wirkt und der zweite Motor (44) mittels eines in einer zur Ebene der ersten Scheibe (16) parallelen Ebene der zweiten Scheibe (20) drehbaren Ritzels (46) auf die zweite Scheibe (20) wirkt.

**13.** Antriebsvorrichtung (10) nach Anspruch 11 oder 12, mit identischen Übersetzungsverhältnissen vom ersten Motor (42) auf die erste Scheibe (16) sowie vom zweiten Motor (44) auf die zweite Scheibe (20), insbesondere mit einem identischen Übersetzungsverhältnis des Ritzels (18) und der ersten Scheibe (16) einerseits sowie des Ritzels (46) und der zweiten Scheibe (20) andererseits.

**14.** Stellantrieb mit einer Antriebsvorrichtung (10) nach einem der vorangehenden Ansprüche.

**15.** Verfahren zum Betrieb einer Antriebsvorrichtung (10) nach einem der Ansprüche 1 bis 13 oder eines Stellantriebs nach Anspruch 14, wobei das Sonnenrad (24) und das Hohlrad (30) gegengleichsinnig und mit unterschiedlichen Treibzahlen oder zum Erhalt unterschiedlicher Treibzahlen angetrieben werden.

**16.** Verfahren nach Anspruch 15 zum Betrieb einer Antriebsvorrichtung (10) nach einem der Ansprüche 5 bis 9, wobei durch Einstellung einer Drehzahl des Motors (12) eine ansonsten durch ein Übersetzungsverhältnis einerseits zwischen dem Sonnenrad (24) und Planetenrädern (34) des Planetenträgers (32) sowie andererseits zwischen dem Hohlrad (30) und den Planetenrädern (34) bestimmte Drehzahl des Planetenträgers (32) beeinflusst wird.

**17.** Verfahren nach Anspruch 15 zum Betrieb einer Antriebsvorrichtung (10) nach einem der Ansprüche 10 bis 13, wobei durch Einstellung einer Drehzahl des ersten Motors (42) sowie Einstellung einer Drehzahl des zweiten Motors (44) ein Treibzahlunterschied zwischen dem Sonnenrad (24) und dem Hohlrad (30) eingestellt wird und durch Einstellung des Treibzahlunterschieds eine ansonsten durch ein Übersetzungsverhältnis einerseits zwischen dem Sonnenrad (24) und Planetenrädern (34) des Planetenträgers (32) sowie andererseits zwischen dem Hohlrad (30) und den Planetenrädern (34) bestimmte Drehzahl des Planetenträgers (32) beeinflusst wird.

**18.** Verfahren nach Anspruch 17, wobei eine Drehrichtung des Planetenträgers (32) dadurch eingestellt wird, dass entweder die Treibzahl des Sonnenrads (24) größer als die Treibzahl des Hohlrads (30) oder die Treibzahl des das Hohlrads (30) größer als die Treibzahl des Sonnenrads (24) ist.

**19.** Verfahren nach Anspruch 17 oder 18, wobei die Antriebsvorrichtung (10) aktiviert wird, indem das Sonnenrad (24) und das Hohlrad (30) auf zu einer übereinstimmenden, vorgegebenen oder vorgebbaren Solltreibzahl führende Drehzahlen beschleunigt werden.

**20.** Verfahren nach Anspruch 17, 18 oder 19, wobei durch Einstellung der Solltreibzahl ein mittels der Antriebsvorrichtung (10) ausübbares Drehmoment eingestellt wird.

FIG 1

EP 3 473 889 A1

FIG 2

17

# FIG 3

# FIG 4

$$\omega_A \sim (\omega_M {}^* i_{MS} {}^* i_{SP}) - (\omega_M {}^* i_{MT} {}^* i_{TH} {}^* i_{TP})$$

# FIG 5

FIG 6

## FIG 7

10

32    28    $\omega_A$

44    46    $i_{M2H}$    $i_{M1S}$    18    42

$\omega_{M2}$    $\omega_{M1}$

$i_{SP}$

22    34    $i_{HP}$

## FIG 8

$\omega_A$

$i_{HP}$    $i_{SP}$

$\omega_H$    $\omega_S$

$i_{M2H}$    $i_{M1S}$

$\omega_{M2}$    $\omega_{M1}$

$$\omega_A \sim (\omega_{M1} {}^* i_{M1S} {}^* i_{SP}) - (\omega_{M2} {}^* i_{M2H} {}^* i_{HP})$$

# FIG 9

Europäisches Patentamt
European Patent Office
Office européen des brevets

# EUROPÄISCHER RECHERCHENBERICHT

Nummer der Anmeldung

EP 17 19 7394

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y<br>A | US 2006/019784 A1 (SOWUL HENRYK [US] ET AL) 26. Januar 2006 (2006-01-26)<br>* Absatz [0036]; Abbildung 1a *<br>----- | 1-3,15<br>4,16<br>5-9 | INV.<br>F16H3/72<br>F16H37/0833 |
| Y<br>A | JP S63 147666 U (N/A) 29. September 1988 (1988-09-29)<br>* Abbildung 3 *<br>----- | 4,16<br>5-9 | |
| A | US 4 279 177 A (YAMASHITA MASAAKI) 21. Juli 1981 (1981-07-21)<br>* Spalte 5, Zeile 55 - Spalte 7, Zeile 64; Abbildungen 3,4 *<br>----- | 1-9,15,16 | |

RECHERCHIERTE SACHGEBIETE (IPC)

F16H

~~Der vorliegende Recherchenbericht wurde für alle Patentansprüche erstellt~~

| Recherchenort | Abschlußdatum der Recherche | Prüfer |
|---|---|---|
| München | 31. Januar 2018 | Martínez Hurtado, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-9, 15, 16

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches Patentamt

European Patent Office

Office européen des brevets

**MANGELNDE EINHEITLICHKEIT DER ERFINDUNG ERGÄNZUNGSBLATT B**

**Nummer der Anmeldung**

EP 17 19 7394

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-9, 15, 16

   Antriebsvorrichtung mit einem Planetengetriebe, die mit genau einem motor und ein erstes und zweites Getriebe enthählt.
   ---

2. Ansprüche: 10-14, 17-20

   Antriebsvorrichtung mit einem Planetengetriebe, das mit zwei Motoren angetrieben wird, um die Drehzahl des Planetenträgers zu bestimmen.
   ---

**ANHANG ZUM EUROPÄISCHEN RECHERCHENBERICHT
ÜBER DIE EUROPÄISCHE PATENTANMELDUNG NR.**

EP 17 19 7394

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-01-2018

| Im Recherchenbericht angeführtes Patentdokument | Datum der Veröffentlichung | Mitglied(er) der Patentfamilie | Datum der Veröffentlichung |
|---|---|---|---|
| US 2006019784 A1 | 26-01-2006 | CN 1724898 A<br>DE 102005033964 A1<br>US 2006019784 A1 | 25-01-2006<br>23-03-2006<br>26-01-2006 |
| JP S63147666 U | 29-09-1988 | KEINE | |
| US 4279177 A | 21-07-1981 | JP S5655746 A<br>JP S5743779 B2<br>US 4279177 A | 16-05-1981<br>17-09-1982<br>21-07-1981 |

EPO FORM P0461

Für nähere Einzelheiten zu diesem Anhang : siehe Amtsblatt des Europäischen Patentamts, Nr.12/82